# EUROPÄISCHE PATENTSCHRIFT

(11) **EP 4 102 191 B1**
(45) Veröffentlichungstag und Bekanntmachung des Hinweises auf die Patenterteilung: **21.08.2024**
(21) Anmeldenummer: 22172115.2
(22) Anmeldetag: 06.05.2022
(51) Int. Cl.: G01F 1/66

(54) **VERFAHREN ZUR HERSTELLUNG EINER MESSEINRICHTUNG UND MESSEINRICHTUNG**
METHOD FOR PRODUCING A MEASURING DEVICE AND MEASURING DEVICE
PROCÉDÉ DE FABRICATION D'UN DISPOSITIF DE MESURE ET DISPOSITIF DE MESURE

(30) Priorität: 08.06.2021 DE 102021114683
(43) Veröffentlichungstag der Anmeldung: 14.12.2022
(73) Patentinhaber: Diehl Metering GmbH, 91522 Ansbach (DE)
(72) Erfinder: Sonnenberg, Hans-Michael, 91564 Neuendettelsau (DE); Benkert, Andreas, 91522 Ansbach (DE)
(74) Vertreter: Diehl Patentabteilung

(56) Entgegenhaltungen:
- EP-A1- 3 492 877
- EP-B1- 2 759 807
- DE-A1- 102011 090 082
- DE-A1- 2 309 605
- DE-U1- 202009 011 310

## Beschreibung

Die Erfindung betrifft ein Verfahren zur Herstellung einer Messeinrichtung, die zur Erfassung einer Fluidgröße dient, wobei die Fluidgröße ein Fluid, das in einem durch einen Messkanal begrenzten Fluidvolumen aufgenommen oder geführt wird, und/oder eine Fluidströmung dieses Fluids betrifft, wobei ein Wandlergehäuse, in dessen Innenraum ein Schwingungswandler angeordnet ist, in einem Innenraum des Messkanals angeordnet wird, der das Fluidvolumen umfasst, wobei das Wandlergehäuse mit dem Messkanal verbunden wird, indem ein Verbindungsmittel derart einerseits in eine Durchbrechung des Messkanals und andererseits in eine Öffnung des Wandlergehäuses eingesetzt wird, dass wenigstens eine Durchführung des Verbindungsmittels, die einen außerhalb des Messkanals gelegenen Außenraum mit dem Innenraum des Wandlergehäuses verbindet, gegenüber dem Fluidvolumen fluiddicht abgedichtet wird. Daneben betrifft die Erfindung eine Messeinrichtung, die zur Erfassung einer Fluidgröße dient.

Messeinrichtungen zur Erfassung von Fluidgrößen, also beispielsweise Durchflusszähler und Messeinrichtungen zur Erfassung anderer Fluideigenschaften, beispielsweise zur Ermittlung einer Dichte oder eines Fluidtyps, können ausnutzen, dass eine Schallführung im Fluid von den Eigenschaften des Fluids bzw. einer Fluidströmung abhängt. So hängt beispielsweise die Laufzeit einer Ultraschallwelle im Fluid von einer Strömungsgeschwindigkeit in Ausbreitungsrichtung ab, sodass es ein übliches Vorgehen ist, Strömungsgeschwindigkeiten und somit bei bekanntem Innendurchmesser eines genutzten Messkanals auch Durchflussmengen in Abhängigkeit von Laufzeitunterschieden zu ermitteln. Da die Laufzeit jedoch auch von der Schallgeschwindigkeit im Fluid beeinflusst wird, kann beispielsweise durch Addition der Laufzeiten für beide Ausbreitungsrichtungen die Schallgeschwindigkeit bzw. eine von dieser abhängende Eigenschaft des Fluids bestimmt werden. Weitere Information über das Fluid können beispielsweise auf Basis einer insbesondere frequenzabhängigen Bedämpfung der sich durch das Fluid ausbreitenden Druckwelle bzw. einer frequenzabhängigen Laufzeit bzw. Phasenverschiebung ermittelt werden. Hierbei werden häufig zwei oder mehr Schwingungswandler genutzt, es kann jedoch auch ausreichend sein, einen Schwingungswandler zu nutzen, beispielsweise wenn eine abgestrahlte Druckwelle an einer gegenüberliegenden Messkanalwand zurück zum gleichen Schwingungswandler reflektiert wird, womit dort Messdaten erfasst werden können.

Ein übliches Vorgehen zum Anbringen von Schwingungswandlern an einem Messkanal ist es, diese von der Außenseite des Messkanals durch Durchbrechungen im Messkanal in diesen einzuführen und die Verbindung zwischen dem jeweiligen Schwingungswandler und der Seitenwand des Messkanals durch ein Dichtmittel abzudichten. Hierbei ist es üblicherweise gewünscht, die Abmessung entsprechende Durchbrechungen relativ klein zu wählen, da die Nutzung großflächiger Durchbrechungen oder eines mehrteiligen Messkanals abträglich für die Robustheit einer Abdichtung sein kann bzw. den Aufwand für die Abdichtung merklich erhöhen kann. Die Beschränkung auf relativ kleine Durchbrechungen führt bei dem beschriebenen Vorgehen jedoch dazu, dass bezüglich der Wahl der Wandlergeometrie des Schwingungswandlers enge Grenzen gesetzt sind, womit unter Umständen Kompromisse bezüglich der gewünschten Eigenschaften des Schwingungswandlers eingegangen werden müssen.

Ein alternativer Einsatz zur Montage eines Schwingungswandlers innerhalb eines Messkanals ist aus der Druckschrift EP 2759807 B1 bekannt. Dort wird ein grob scheibenförmiges Wandlergehäuse, das einen Schwingungswandler aufnimmt, mittig im Messkanal angeordnet, indem das Wandlergehäuse durch einen Strömungsrichter getragen wird. Die Kontaktierung des Schwingungswandlers erfolgt über flexible Kabel, die zunächst durch einen radialen Steg des Strömungsrichters gefädelt werden, wonach sie vor dem Einbau des Strömungsrichters in den Messkanal durch eine Durchbrechung des Messkanals und eine Drahtdurchführung gefädelt werden. Nach dem Einsetzen des Strömungsrichters in den Messkanal wird die Drahtdurchführung entlang der Anschlussleitungen in die Durchbrechung eingeschoben, um den die Leitung führenden Bereich gegen das Fluid abzudichten. Nachteilig ist hierbei, dass eine relativ komplexe Führung der flexiblen Anschlussleitungen im Rahmen des Zusammenbaus erforderlich ist, sodass sich dieser Zusammenbau relativ aufwändig gestaltet und eine Automatisierung dieses Vorgangs nur mit dem sehr hohen technischen Aufwand möglich wäre.

Die Druckschrift EP 3 492 877 A1 offenbart die Nutzung eines Wandlergehäuses, das eine Messrohrwand durchgreift und in das eine Wandlereinheit eingeschoben ist, die einen Schwingungswandler umfasst. Ein Koaxialkabel, das Kontaktelemente kontaktiert, die zur Bestromung des Schwingungswandlers dienen, ist durch eine Öffnung jenes Abschnitts des Wandlergehäuses geführt, das die Messrohrwand durchgreift.

Die Druckschrift DE 10 2011 090 082 A1 offenbart einen Ultraschallwandler mit einem ersten Gehäuseteil, der ein Ultraschallfenster mit daran angeordnetem Schwingungswandler aufweist, eine Durchbrechung des Messkanals durchgreift und über eine zweite, außerhalb des Messkanals angeordnete Gehäusekomponente gegen die Ränder der Durchbrechung vorgespannt ist. Eine Kontaktierung der von dem Ultraschallfenster abgewandten Seite des Schwingungswandlers erfolgt über die zweite Gehäusekomponente. Dort ist ein Stecker mittels elektrischer Leitungen kontaktiert. Das Wandlerelement ist durch eine Spiralfeder kontaktiert, die zwischen dem Schwingungswandler und dem Stecker eingespannt ist.

Weitere Möglichkeiten, Schwingungswandler in Durchflussmesseinrichtungen anzuordnen und zu kontaktieren, sind beispielsweise aus den Druckschriften DE 23 09 605 A1 und DE 20 2009 011 310 U1 bekannt.

Der Erfindung liegt somit die Aufgabe zugrunde, eine Möglichkeit anzugeben, eine entsprechende Messeinrichtung mit geringerem Aufwand herzustellen, ohne auf die Vorteile der Verlegung des Schwingungswandlers ins Messkanalinnere zu verzichten.

Die Aufgabe wird erfindungsgemäß durch ein Verfahren der eingangs genannten Art gelöst, wobei gemeinsam mit oder nach dem Einsetzen des Verbindungsmittels in die Öffnung des Wandlergehäuses oder als Teilkomponente des Verbindungsmittels wenigstens ein durch die Durchführung geführter elektrischer Leiter in den Innenraum des Wandlergehäuses eingeführt wird, durch den ein jeweiliger elektrischer Kontakt des Schwingungswandlers kontaktiert wird, um diesen mit einer in dem Außenraum angeordneten Steuereinrichtung der Messeinrichtung zu verbinden, wobei der jeweilige Leiter derart mit dem jeweiligen elektrischen Kontakt verbunden wird, dass der Leiter und der elektrische Kontakt durch ein Anpresselement aufeinandergepresst werden, das in dem Außenraum angeordnet ist oder das sich durch die oder eine weitere Durchführung des Verbindungsmittels von dem Innenraum des Wandlergehäuses in den Außenraum erstreckt.

Im Rahmen der Erfindung wurde erkannt, dass die Herstellung der obig erläuterten Messeinrichtung erheblich vereinfacht werden kann, wenn das Einführen des Leiters in den Innenraum des Wandlergehäuses und somit eine Kontaktierung des Schwingungswandlers durch diesen Leiter erst gemeinsam mit oder nach dem Einsetzen des Verbindungsmittels erfolgt bzw. wenn der Leiter selbst eine Teilkomponente des Verbindungsmittels ist. Wie später noch im Detail erläutert werden wird, kann es in diesem Fall bereits ausreichend sein, einen starren oder elastisch verformbaren Leiter im Wesentlichen geradlinig zum elektrischen Kontakt, also beispielsweise zu einer leitenden Kontaktfläche bzw. einem leiten Kontaktbereich, insbesondere zu einer Elektrode oder Ähnlichem, zu führen, um den Schwingungswandler zu kontaktieren. Eine komplexe Führung eines flexiblen Drahtes ist somit nicht erforderlich. Wie später noch detailliert erläutert werden wird, kann der Leiter insbesondere durch eine Klemmung bzw. ein Anpressen an den elektrischen Kontakt durch ein Anpresselement positionsrichtig gehalten werden, sodass eine robuste Kontaktierung des Schwingungswandlers möglich ist, ohne dass hierfür beispielsweise ein Werkzeug in das Wandlergehäuse eingeführt werden müsste, sodass zum Anbringen und Kontaktieren des Schwingungswandlers nur wenige, gut automatisierbare Herstellungsschritten erforderlich sind.

Auch eine Ausbildung des jeweiligen Leiters als Teil des Verbindungsmittels, also z.B. als Leiterbahn auf einem Grundkörper des Verbindungsmittels oder als zumindest Teilweise umspritzter Leiter, erreicht die genannten Vorteile. Im Weiteren wird primär jene Variante diskutiert, in der der Leiter separat von dem Verbindungsmittel ausgebildet ist, da die Variante des Verfahrens, in der der Leiter als Teilkomponente des Verbindungsmittels ausgebildet ist, abgesehen von der Zusammenfassung von Leiter und Verbindungsmittel in einer gemeinsamen Komponente, als Sonderfall des gemeinsamen Einbringens von Leiter und Verbindungsmittel aufgefasst werden könnte und daher eine separate Erläuterung zu unnötigen Wiederholungen führen würde.

Das Verbindungsmittel kann einteilig ausgeführt sein und beispielsweise von dem Außenraum durch die Durchbrechung des Messkanals in die Öffnung des Wandlergehäuses eingeführt werden. Dies ermöglicht ein Einbringen in einem besonders einfachen Arbeitsschritt und insbesondere eine Fixierung des Wandlergehäuses in Längs- und Umfangsrichtung des Messkanals. Dies kann insbesondere vorteilhaft sein, wenn das Wandlergehäuse vorangehend bereits an einen Messeinsatz eingebracht ist, da somit auch die Position und Orientierung dieses Messeinsatzes festgelegt werden kann. In einigen Fällen kann es jedoch vorteilhaft sein, das Verbindungsmittel von der Innenseite her in die Durchbrechung des Messkanals einzusetzen. Dies kann vor oder nach dem Einsetzen in die Öffnung des Wandlergehäuses erfolgen.

Alternativ kann beispielsweise ein zweiteiliges oder allgemein mehrteiliges Verbindungsmittel genutzt werden. Beispielsweise kann ein erstes Verbindungselement von der Außenseite durch die Durchbrechung geführt werden und innerhalb des Messkanals mit einem zweiten Verbindungselement des Verbindungsmittels verbunden werden, das in die Öffnung des Wandlergehäuses eingreift.

Die Nutzung eines mehrteiligen Verbindungsmittels kann es auch ermöglichen, dass ein Verbindungselement eine relativ große Öffnung im Wandlergehäuse schließt und lediglich eine oder mehrere Öffnungen aufweist, die so klein sind, dass ein jeweiliger Leiter hindurchgeführt werden kann. Dieses Verbindungselement kann an dem Wandlergehäuse angebracht werden, insbesondere bevor dieses gemeinsam mit einem Messeinsatz in den Messkanal eingebracht wird. Durch Anbringen eines weiteren Verbindungselements, das durch die Durchbrechung des Messkanals eingeführt wird, an dem Verbindungselement zur Bildung des Verbindungsmittels kann dann die Position und Orientierung des ersten Verbindungselements und somit auch des Wandlergehäuses bzw. des Messeinsatzes festgelegt werden.

Die Steuereinrichtung kann dazu eingerichtet sein, den Schwingungswandler anzusteuern, um eine Druckwelle in dem Fluid anzuregen, von der Druckwelle abhängige Messdaten über den Schwingungswandler oder einen weiteren Schwingungswandler der Messeinrichtung zu erfassen und die Fluidgröße in Abhängigkeit der Messdaten zu ermitteln. Wird ein weiterer Schwingungswandler genutzt, kann dieser in einem weiteren Wandlergehäuse angeordnet werden, das wiederum in dem Messkanal angeordnet wird. Hierbei können die zum Schwingungswandler bzw. Wandlergehäuse erläuterten Merkmale auf den weiteren Schwingungswandler und das weitere Wandlergehäuse übertragen werden. Allgemein können mehrere Wandlergehäuse, die einen jeweiligen Schwingungswandler aufnehmen, jeweils im Innenraum des Messkanals angeordnet werden und über ein jeweiliges Verbindungsmittel mit einer jeweiligen Durchbrechung des Messkanals verbunden werden, um eine Durchführung der den jeweiligen Schwingungswandler kontaktierenden elektrischen Leiter durch das Verbindungsmittel zu ermöglichen.

Als Außenraum kann prinzipiell der gesamte außerhalb des Messkanalinneren liegende Raum betrachtet werden. Die Steuereinrichtung kann somit beispielsweise beabstandet von dem Messkanal oder freiliegend auf dem Messkanal montiert sein. Es kann jedoch vorteilhaft sein, die Steuereinrichtung bzw. weitere Messelektronik in ein Gehäuse zu integrieren, dass beispielsweise auch am Messkanal befestigt sein kann. Auch ein Innenraum eines solchen Gehäuses kann als Außenraum bzw. Teil des Außenraums betrachtet werden, da er außerhalb des Innenraums des Messkanals liegt.

Das Anordnen des Wandlergehäuses im Innenraum des Messkanals erfolgt insbesondere über weitere Durchbrechungen bzw. Öffnungen des Messkanals, die insbesondere den Zu- bzw. Ablaufen des Messkanals bilden können. Die Durchbrechung, in die das Verbindungsmittel eingesetzt wird, ist hingegen vorzugsweise eine Durchbrechung der Seitenwand des Messkanals.

Die Kontaktierung des Schwingungswandlers erfolgt typischerweise über zwei elektrische Leiter, die als elektrischen Kontakt oder über den elektrischen Kontakt eine jeweilige Elektrode des Schwingungswandlers kontaktieren. Verschiedene Leiter können durch eine gemeinsame Durchführung des Verbindungsmittels geführt sein, es können jedoch auch separate Durchführungen genutzt werden, die beispielsweise durch eine isolierende Zwischenwand des Verbindungsmittels getrennt werden. Dies kann vorteilhaft sein, da es bei einer Führung der Leiter in separaten Durchführungen unter Umständen nicht erforderlich ist, diese zu isolieren. Es ist auch möglich, dass zwei oder mehr Leiter zwar durch eine gemeinsame Durchführung geführt werden, jedoch durch ein zusätzliches Bauteil voneinander separiert sind. Ein solches separate Bauteil kann beispielsweise ein später noch diskutiertes Anpresselement sein, dass zur Herstellung eines robusten Kontaktes zwischen dem jeweiligen elektrischen Kontakt und dem zugeordneten Leiter dient.

Der Messkanals kann ein gerades oder auch gekrümmtes Messrohr sein oder umfassen. Es sind jedoch auch andere Bauformen möglich. Beispielsweise kann der Messkanal, also die Einhausung des Innenraums bzw. des Fluidvolumens, auch durch die Messkapsel und/oder das Gehäuse eines Messkapselzählers gebildet sein. Der Messkanal kann einteilig sein, was eine besonders leichte Abdichtung ermöglicht. Alternativ kann der Messkanal beispielsweise durch zwei Teile, z.B. Schalen, gebildet sein, welche zueinander abgedichtet werden können.

Der jeweilige Leiter wird erfindungsgemäß derart mit dem jeweiligen elektrischen Kontakt verbunden, dass der Leiter und der elektrische Kontakt durch ein Anpresselement aufeinandergepresst werden, das in dem Außenraum angeordnet ist oder das sich durch die oder eine weitere Durchführung des Verbindungsmittels von dem Innenraum des Wandlergehäuses in den Außenraum erstreckt. Dies ermöglicht es insbesondere, dass das Anpresselement im Rahmen der Herstellung ausschließlich von Seiten des Außenraums her gehandhabt werden muss, womit insbesondere eine robuste Verbindung zwischen Leiter und elektrischem Kontakt hergestellt werden kann, ohne dass Werkzeuge oder an der Herstellung beteiligte Personen in die Durchführung bzw. das Wandlergehäuse eingreifen müssen. Dies kann die zur Herstellung erforderlichen Handgriffe erheblich vereinfachen bzw. eine Automatisierung deutlich erleichtern. Dadurch dass das Anpresselement im Außenraum angeordnet ist bzw. sich zumindest dorthin erstreckt, ist vom Außenraum her mit geringem Aufwand eine robuste Verbindung zwischen Leiter und elektrischen Kontakt möglich.

Insbesondere wenn ein Anpresselement genutzt wird, das vollständig im Außenraum angeordnet ist, kann ein elektrischer Leiter genutzt werden, der elastisch verformbar ist und durch das Anbringen des Anpresselements in seiner Endposition vorgespannt wird. Beispielsweise kann der Leiter zumindest abschnittsweise als Schraubenfeder ausgebildet sein, die zwischen dem Anpresselement und dem elektrischen Kontakt komprimiert ist.

Als Anpresselement kann eine Leiterplatte verwendet werden, die wenigstens ein elektrisch mit dem Leiter verbundenes Bauteil trägt und/oder wenigstens eine elektrisch mit dem Leiter verbundene Leiterbahn ausbildet. Die Leiterplatte kann insbesondere vollständig im Außenraum angeordnet sein, beispielsweise in einem separaten oder außen am Messkanal angebrachten Gehäuse. Die Leiterplatte kann insbesondere die Steuereinrichtung bzw. zumindest Teile von deren Bauteilen tragen. Alternativ oder ergänzend können dort Bauteile zur Signalkonditionierung, also beispielsweise aktive und/oder passive Filter, Verstärker usw. angeordnet sein.

Die Verbindung zwischen Leiter und Anpresselement kann insbesondere durch eine stoffschlüssige Verbindung, z.B. durch Löten, Schweißen oder Verkleben, erfolgen und/oder insbesondere zur elektrischen Kontaktierung des Leiters dienen, während die mechanische Fixierung und/oder die elektrische Kontaktierung des Leiters durch den elektrischen Kontakt im Innenraum des Wandlergehäuses vorzugsweise ausschließlich durch einen Kraftschluss durch das Anpressen des Leiters durch das Anpresselement erfolgt.

Elektrische Leiter zur Kontaktierung wenigstens eines Schwingungswandlers können insbesondere auf eine solchen Leiterplatte vormontiert sein und von dieser stiftartig abstehen. Wird die Leiterplatte korrekt positioniert und im Wesentlichen parallel zur Erstreckung der elektrischen Leiter derart angebracht, dass im Rahmen des Anbringens die Leiter in eine bzw. eine jeweilige Durchbrechung eines oder mehrerer Verbindungsmittel eingeführt werden, kann die Kontaktierung von einem Schwingungswandler oder von mehreren Schwingungswandler automatisch im Rahmen der Montage einer solchen Leiterplatte und somit mit geringerem Aufwand erfolgen.

In dem Fall, dass sich das Anpresselement durch die oder die weitere Durchführung des Verbindungsmittels in den Außenraum erstreckt, kann das Anpresselement von dem Außenraum aus in einer Einschubrichtung durch diese Durchführung geschoben werden, wobei eine Pressfläche des Anpresselements derart gekrümmt ist oder gewinkelt zu der Einschubrichtung verläuft, dass sie bei dem Einschieben den elektrischen Kontakt oder den Leiter in Richtung senkrecht zur Einschubrichtung verschiebt oder verbiegt, um den elektrischen Kontakt auf den Leiter oder den Leiter auf den elektrischen Kontakt zu drücken.

Das Anpresselement kann insbesondere zwei gegenüberliegende Pressflächen aufweisen, die beispielsweise in Form eines insbesondere abgestumpften Keils angeordnet sind, und die jeweils dazu dienen, einen von zwei elektrischen Kontakten bzw. Leitern zu verschieben bzw. zu verbiegen. Beispielsweise kann das Anpresselement zwischen zwei Blechelektroden oder mit Elektroden des Schwingungswandlers verbundenen Kontaktblechen eingeführt werden, um diese etwas auseinander zu spreizen und somit in Kontakt mit neben diesen geführten elektrischen Leitern zu bringen.

Ein derartiges Vorgehen kann besonders zweckmäßig sein, wenn sich die Durchführung im Wesentlichen parallel zu einer Fläche des Schwingungswandlers erstreckt, über die die Schwingung, insbesondere über eine Wand des Wandlergehäuses oder einen Wellenleiter, in das Fluid eingekoppelt bzw. von dort empfangen wird, bzw. parallel zu einer zu kontaktierenden Elektrode des Schwingungswandlers erstreckt. Wie später noch anhand eines konkreten Ausführungsbeispiels beschrieben werden wird, kann eine solche Kontaktierung auch besonders zweckmäßig sein, wenn der Schwingungswandler nicht dazu dient, unmittelbar Druckwellen anzuregen, sondern stattdessen eine Einkopplung von geführten Wellen, insbesondere von Lamb-Wellen, in einen insbesondere plattenförmigen Wellenleiter erfolgen soll, die wiederum Druckwellen im Fluid anregen.

Das Verbindungsmittel kann derart mit dem Messkanal und dem Wandlergehäuse verbunden werden, dass einerseits ein Zwischenraum zwischen der Außenwand des Verbindungsmittels und der Durchbrechung des Messkanals durch ein Messkanaldichtmittel fluiddicht verschlossen wird und dass andererseits ein Zwischenraum zwischen der die Öffnung des Wandlergehäuses begrenzenden Gehäusewand und der Außenwand des Verbindungsmittels durch ein Gehäusedichtmittel Fluid dicht verschlossen wird. Insbesondere kann somit ein Abschnitt der Außenwand des Verbindungsmittels bei einem Betrieb der Messeinrichtung mit dem Fluid in Kontakt stehen, insbesondere die gesamte Fläche der Außenwand im Bereich zwischen dem Messkanaldichtmittel und dem Gehäusedichtmittel. Dies ermöglicht es beispielsweise, dass Wandlergehäuse mit geringerem Aufwand auch deutlich von der Messkanalwand zu beabstanden, was für diverse Wandlergeometrien des Schwingungswandlers bzw. Durchstrahlungsgeometrien zur Durchstrahlung des Fluids vorteilhaft sein kann.

Das Wandlergehäuse kann durch einen Fluideinlass oder einen Fluidauslass des Messkanals in diesen eingebracht werden. Im Betrieb der Messeinrichtung kann das Fluid über den Fluideinlass in den Messkanal einströmen und über den Fluidauslass wieder aus diesem abgeführt werden. Eine Einführung des Wandlergehäuses durch den Fluideinlass bzw. Fluidauslass ist insbesondere vorteilhaft, wenn das Wandlergehäuse in einem vorangehenden Schritt an einem Messeinsatz eingebracht wurde, der beispielsweise mehrere der Wandlergehäuse tragen kann und/oder der zur Verengung des Kanalquerschnitts im Messbereich bzw. zur Strömungskonditionierung dient. In diesem Fall kann der Messeinsatz gemeinsam mit dem wenigstens einen daran angebrachten Wandlergehäuse über den Fluideinlass oder den Fluidauslass in den Messkanal eingebracht werden.

Durch das Eingreifen des Verbindungsmittels in die Öffnung des Wandlergehäuses kann zudem die Lage dieser Öffnung und somit des Wandlergehäuses in Längs- und Umfangsrichtung des Messkanals mit geringerem Aufwand und hoher Genauigkeit festgelegt werden. Wurde das wenigstens eine Wandlergehäuse zuvor positionsfest am Messeinsatz festgelegt, kann somit das Einsetzen des Verbindungsmittels in die Öffnung des Messgehäuses zugleich zur Festlegung von Position und Orientierung des Messeinsatzes dienen.

Der Schwingungswandler und/oder ein Dämpfelement, das zur zumindest teilweisen Entkopplung des Schwingungswandlers von einer Seitenwand des Wandlergehäuses dient, können über die Öffnung des Wandlergehäuses in das Wandlergehäuse eingesetzt werden. Dies erfolgt vorzugsweise vor dem Anordnen des Wandlergehäuses in dem Innenraum des Messkanals. Insbesondere können die Abmessungen des Schwingungswandlers bzw. des Dämpfelements so gewählt sein, dass er bzw. es nicht durch die Durchbrechung des Messkanals und/oder die Durchführung führbar sind. Die relativ große Öffnung des Wandlergehäuses, die das Einsetzen des Schwingungswandlers bzw. des Dämpfelements ermöglicht, kann insbesondere mit dem Einführen des Verbindungsmittels weitgehend verschlossen werden, sodass ein Zugang zum Innenraum des Wandlergehäuses über diese Öffnung nur noch durch die relativ schmale Durchführung bzw. schmalen Durchführungen möglich ist, womit der Schwingungswandler bzw. das Dämpfelement durch das Einsetzen des Verbindungsmittels in die Öffnung im Innenraum des Wandlergehäuses gehaltert sein können. Somit kann das Verbindungsmittel im Ergebnis auch einen Teil der Außenwand des Wandlergehäuses bilden.

Wenigstens eine Seitenwand des Wandlergehäuses, die beim Betrieb des Schwingungswandlers zu Schwingungen angeregt wird, um Druckwellen in das Fluid einzukoppeln, kann eine variable Dicke aufweisen, wodurch beispielsweise eine konkave, beispielsweise eine parabolische, Form der dem Fluid zugewandten Seite dieser Wand erreicht werden kann, wodurch beispielsweise eine abgestrahlte Druckwelle gerichtet bzw. fokussiert werden kann.

In dem Messkanal kann ein Wellenleiter angeordnet werden, wobei der Schwingungswandler derart an einem Endabschnitt des Wellenleiters angebracht ist oder wird, dass durch einen Betrieb des Schwingungswandlers eine geführte Welle in dem Wellenleiter anregbar ist, wobei der Endabschnitt des Wellenleiters durch eine weitere Öffnung des Wandlergehäuses in dieses eingeführt wird, um den Schwingungswandler in dem Wandlergehäuse anzuordnen, insbesondere bevor das Verbindungsmittel in die Öffnung des Wandlergehäuses eingesetzt wird und/oder bevor der durch die Durchführung geführte elektrische Leiter in den Innenraum des Wandlergehäuses eingeführt wird.

Durch das beschriebene Vorgehen kann insbesondere eine Messeinrichtung hergestellt werden, bei der durch den Schwingungswandler nicht unmittelbar Druckwellen in dem Fluid angeregt werden, sondern zunächst eine Anregung von geführten Wellen, insbesondere von Lamb-Wellen, in dem Wellenleiter erfolgt. Der Wellenleiter kann beispielsweise plattenförmig sein. Ist eine Seitenfläche des Wellenleiters in Kontakt mit dem Fluid, können durch die im Wellenleiter geführte Welle Druckwellen in das Fluid abgestrahlt werden. Umgekehrt können Druckwellen im Fluid geführte Wellen im Wellenleiter auslösen, die über den mit dem Wellenleiter gekoppelten Schwingungswandler erfasst werden können.

Während es prinzipiell möglich ist, dass nur eine Seite des Wellenleiters beim Betrieb der Messeinrichtung mit dem Fluid in Kontakt ist, ist das beschriebene Vorgehen auch problemlos nutzbar, wenn der gesamte Wellenleiter, abgesehen von dem Endabschnitt oder den Endabschnitten, der den bzw. die die Schwingungswandler trägt bzw. tragen, durch Fluid umspülbar ist bzw. sein Rückvolumen nicht vollständig fluiddichtdicht abgeschlossen ist. Insbesondere kann ein fluiddichter Abschluss der weiteren Öffnung, speziell durch ein zwischen dem Wellenleiter und der die weitere Öffnung begrenzenden Seitenwand des Wandlergehäuses angeordnetes Dichtmittel, beispielsweise durch einen Dichtring, erfolgen. Somit wird durch das erfindungsgemäße Verfahren insbesondere die Herstellung von Messeinrichtungen, die geführte Wellen nutzen, erhebliche vereinfacht.

Eine Anregung von geführten Wellen, insbesondere von Lamb-Wellen, soll vorzugsweise modenselektiv erfolgen, sodass zumindest näherungsweise ausschließlich eine einzige Wellenmode angeregt werden kann. Hierbei kann die Messeinrichtung grundsätzlich dazu eingerichtet sein im Wesentlichen ausschließlich eine Schwingungsmode anzuregen oder es können in verschiedene Betriebssituationen verschiedene Schwingungsmoden angeregt werden. Eine modenselektive Anregung ist besonders relevant, wenn Lamb-Wellen als geführte Wellenangeregt werden, da bei diesen stets wenigstens zwei Schwingungsmoden bei gleicher Schwingungsfrequenz anregbar sind, die eine voneinander unterschiedliche Wellenlängen und somit in der Regel auch unterschiedliche Ausbreitungsgeschwindigkeiten in dem Wellenleiter aufweisen. Da der Rayleigh-Winkel, unter dem aufgrund der geführten Welle Druckwellen in das Fluid abgestrahlt werden, von der Ausbreitungsgeschwindigkeit der geführten Wellen im Wellenleiter abhängt, würden bei einer gleichzeitigen Anregung unterschiedlicher Schwingungsmoden auch unterschiedliche Ausbreitungspfade resultieren. Ein empfangenes Signal würde somit einem überlagerten Signal für mehrere Ausbreitungspfade entsprechen. In einigen Anregungs- und Empfangsgeometrien kann zwar erreicht werden, dass Signale für unterschiedliche Ausbreitungspfade gut separiert werden können. Da dies jedoch nicht in allen Anwendungsfällen möglich ist, wird eine modenselektive Anregung in der Regel bevorzugt.

Um eine solche modenselektive Anregung von geführten Wellen zu erreichen, können beispielsweise Interdigitaltransducer genutzt werden, die in der Regel aus einem piezoelektrischen Material gebildet sind, dass mit einer Fläche den Wellenleiter bzw. ein zwischen diesem und dem Schwingungswandler angeordnetes Kopplungselement bzw. eine Kopplungsschicht kontaktieren und auf anderer Seite fingerartig ineinandergreifende Elektroden aufweist. Durch Wahl einer geeigneten Beabstandung der Elektroden kann erreicht werden, dass bestimmte Schwingungsmoden konstruktiv oder destruktiv interferieren, womit eine gute Modenselektivität erreicht werden kann.

Ein alternativer Ansatz zur modenselektiven Anregung ist es, die Anregung in voneinander beabstandeten Abschnitten der Oberfläche des Wellenleiters durchzuführen. Dies kann beispielsweise durch ein Kopplungselement, das ein Schwingungswandler nur in bestimmten Bereichen mit dem Wellenleiter koppelt, erfolgen. Bevorzugt werden jedoch separate Schwingelemente, beispielsweise separate Stäbe aus piezoelektrischem Material, genutzt, wobei durch geeignete Wahl des Abstandes, und vorzugsweise auch einer Polarität bzw. einer Phasenlage der Anregungssignale, für die verschiedenen Schwingelemente gezielt eine konstruktive Interferenz für eine gewünschte Mode und/oder eine destruktive Interferenz für eine nicht gewünschte Mode erreicht werden kann.

Es wurde zudem erkannt, dass eine gute Modenreinheit der Anregung auch erreicht werden kann, wenn ein relativ einfach aufgebauter Schwingungswandler Schwingungen über eine Stirnfläche des Wellenleiters einkoppelt, die die gewinkelt, insbesondere mit einem Winkel von wenigstens 80° oder wenigstens 85°, zu einer Oberfläche des Wellenleiters steht, die parallel zur Ausbreitungsrichtung der geführten Wellen verläuft. Als Schwingungswandler kann in diesem Fall beispielweise ein piezoelektrischer Grundkörper genutzt werden, dessen Elektroden vorzugsweise im Wesentlichen parallel zu der Oberfläche des Wellenleiters, also beispielsweise in einem Winkel von weniger als 10° oder 5° zu dieser Oberfläche, angeordnet sind. Wird nun die Polarisierung des piezoelektrischen Grundkörpers so gewählt, dass er Dickenschwingungen senkrecht zu seinen die Elektroden tragenden Seitenflächen durchführt, wird modenselektiv eine symmetrische Schwingungsmode angeregt. Wird hingegen ein Grundkörper genutzt, der Scherschwingen durchführt, erfolgt eine modenselektive Anregung einer antisymmetrischen Schwingungsmode der geführten Welle.

Der Schwingungswandler, insbesondere ein piezoelektrischer Grundkörper des Schwingungswandlers, kann mit dem Wellenleiter insbesondere mit seiner Stirnseite, verklebt sein. Durch eine solche Verklebung können insbesondere auch Scherkräfte gut übertragen werden, womit die obig erläuterte Modenselektivität besonders gut erreicht werden kann.

Um bedarfsgerecht verschiedene Schwingungsmoden nutzen zu können, kann beispielsweise ein piezoelektrischer Grundkörper genutzt werden, der in verschiedenen Abschnitten verschiedene Polarisierungen aufweist, wobei zumindest einseitig eine geteilte Elektrode genutzt werden kann, sodass je nach bestromter Elektrode unterschiedliche Schwingungsmoden bzw. unterschiedliche Schwingungsmoden mit unterschiedlichen Amplituden abgestrahlt werden können. Alternativ können auch separate Schwingungswandler für die separaten Schwingungsmoden an der Stirnfläche befestigt werden.

Neben dem erfindungsgemäßen Verfahren betrifft die Erfindung eine Messeinrichtung, die zur Erfassung einer Fluidgröße dient, wobei die Fluidgröße ein Fluid, das in einem durch einen Messkanal begrenzten Fluidvolumen aufgenommen oder geführt wird, und/oder eine Fluidströmung dieses Fluids betrifft, wobei die Steuereinrichtung dazu eingerichtet ist, einen Schwingungswandler der Messeinrichtung anzusteuern, um eine Druckwelle in dem Fluid anzuregen, von der Druckwelle abhängige Messdaten über den Schwingungswandler oder einen weiteren Schwingungswandler der Messeinrichtung zu erfassen und die Fluidgröße in Abhängigkeit der Messdaten zu ermitteln, wobei der Schwingungswandler und/oder der weitere Schwingungswandler jeweils in dem Innenraum eines jeweiligen Wandlergehäuses angeordnet sind, das in einem Innenraum des Messkanals angeordnet ist, der das Fluidvolumen umfasst, wobei das jeweilige Wandlergehäuse mit dem Messkanal verbunden ist, indem ein jeweiliges Verbindungsmittel derart einerseits in eine jeweilige Durchbrechung des Messkanals und andererseits in eine Öffnung des jeweiligen Wandlergehäuses eingesetzt ist, dass wenigstens eine Durchführung des jeweiligen Verbindungsmittels, die einen außerhalb des Messkanals gelegenen Außenraum mit dem Innenraum des jeweiligen Wandlergehäuses verbindet, gegenüber dem Fluidvolumen fluiddicht abgedichtet ist, wobei wenigstens ein durch die Durchführung geführter elektrischer Leiter in den Innenraum des jeweiligen Wandlergehäuses geführt ist, durch den jeweils ein zugeordneter elektrischer Kontakt des Schwingungswandlers oder des weiteren Schwingungswandlers kontaktiert wird, um diesen mit der in dem Außenraum angeordneten Steuereinrichtung der Messeinrichtung zu verbinden, wobei die Messeinrichtung ein Anpresselement umfasst, durch das der jeweilige Leiter und der zugeordnete elektrische Kontakt aufeinander gepresst werden, wobei das Anpresselement in dem Außenraum angeordnet ist oder sich durch die oder eine weitere Durchführung des Verbindungsmittels von dem Innenraum des Wandlergehäuses in den Außenraum erstreckt.

Die erfindungsgemäße Messeinrichtung kann insbesondere durch das erfindungsgemäße Verfahren hergestellt oder durch dieses herstellbar sein. Unabhängig von der Herstellung der Messeinrichtung lassen sich die zum erfindungsgemäßen Verfahren erläuterten Merkmale mit den dort genannten Vorteilen auf die erfindungsgemäße Messeinrichtung übertragen.

Das Anpresselement kann eine Leiterplatte sein, die wenigstens ein elektrisch mit dem Leiter verbundenes Bauteil trägt und/oder wenigstens eine elektrisch mit dem Leiter verbundene Leiterbahn ausbildet.

In dem Fall, dass sich das Anpresselement durch die oder die weitere Durchführung des Verbindungsmittels in den Außenraum erstreckte, kann das Anpresselement von dem Außenraum aus in eine Einschubrichtung durch diese Durchführung geführt sein, wobei eine Pressfläche des Anpresselements derart gekrümmt ist oder gewinkelt zu der Einschubrichtung verläuft, dass der elektrische Kontakt oder der Leiter durch die Pressfläche senkrecht zur Einschubrichtung gegen eine elastische Rückstellkraft verschoben oder verbogen ist, wodurch der elektrische Kontakt auf den Leiter oder der Leiter auf den elektrischen Kontakt gedrückt ist.

Das Verbindungsmittel kann derart mit dem Messkanal und dem Wandlergehäuse verbunden sein, dass einerseits ein Zwischenraum zwischen der Außenwand des Verbindungsmittels und der Durchbrechung des Messkanals durch ein Messkanaldichtmittel fluiddicht verschlossen ist und dass andererseits ein Zwischenraum zwischen der die Öffnung des Wandlergehäuses begrenzenden Gehäusewand und der Außenwand des Verbindungsmittels durch ein Gehäusedichtmittel fluiddicht verschlossen ist.

Das Wandlergehäuse kann den Schwingungswandler unmittelbar oder in Verbindung mit dem Verbindungsmittel und/oder einem zusätzlich im Wandlergehäuse angeordneten Halter haltern. Ein solcher Halter kann beispielsweise ein elastisches Element sein oder umfassen, beispielsweise eine Feder, die den Schwingungswandler gegen eine Seitenwand des Wandlergehäuses drückt.

Zumindest an einer Seite des Schwingungswandlers, die jener Seite, an der dieser Schwingungen in die Wand des Wandlergehäuses oder in einen Wellenleiter einkoppelt, gegenüberliegt, kann eine Abstützung des Schwingungswandlers durch den Halter oder ein Dämpfelement erfolgen. Ein solches Dämpfelement kann beispielsweise dazu dienen, eine Wand des Wandlergehäuses zumindest zu einem gewissen Grad von den Schwingungen des Schwingungswandlers zu entkoppeln, beispielsweise um eine Abstrahlung der Druckwelle in eine nicht gewünschte Abstrahlrichtung zu unterdrücken bzw. zu bedämpfen.

Der Schwingungswandler und/oder der weitere Schwingungswandler kann einen Schwingkörper aus einem aktiven Material umfassen, wobei wenigstens einer der elektrischen Kontakte des und/oder des weiteren Schwingungswandlers durch eine Elektrode des jeweiligen Schwingkörpers oder ein diese Elektrode kontaktierendes Kontaktblech gebildet wird, wobei ein Kontaktabschnitt dieser Elektrode oder dieses Kontaktblechs sich über diesen Schwingkörper hinaus erstreckt, wobei der zugeordnete Leiter die Elektrode oder das Kontaktblech in diesem Kontaktabschnitt beabstandet von dem Schwingkörper kontaktiert.

Durch die beschriebene Ausgestaltung des Kontaktabschnittes und der Kontaktierung wird erreicht, dass die elektrischen Kontakte von Bereichen des Schwingkörpers, die an schwer zugänglichen Stellen im Wandlergehäuse liegen, an leichter zugängliche Stellen im Innenraum des Wandlergehäuses verlegt werden können. Beispielsweise kann eine Elektrode an einer aktiven Fläche des Schwingungswandlers angeordnet sein, über die Schall abgestrahlt werden soll, und somit z.B. zwischen einer Wand des Wandlergehäuses und dem Schwingkörper liegen. Durch die beschriebene Ausgestaltung der Elektrode bzw. des Kontaktblechs ist eine Kontaktierung seitlich neben dem Schwingkörper oder auch an der von der aktiven Fläche abgewandten Rückseite des Schwingkörpers möglich, wobei diese Bereiche typischerweise weit besser zugänglich sind.

Die von dem Schwingkörper beabstandete Kontaktierung kann es ermöglichen, den elektrischen Leiter im Wesentlichen geradlinig zu dem Kontaktabschnitt zu führen, sodass dieser beispielsweise durch ein im Außenraum liegendes Anpresselement auf den elektrischen Kontakt gepresst werden kann. Das beschriebene Vorgehen kann auch genutzt werden, um den elektrischen Kontakt gezielt gegenüber dem Schwingkörper zu versetzten. Beispielsweise kann es zur Herstellung einer kurz bauenden Messeinrichtung gewünscht sein, den Schwingkörper bzw. die aktive Fläche, über die eine Anregung erfolgt, in einem Abschnitt des Messkanals anzuordnen, der ein Gewinde zur Verbindung mit einem fluidzuführenden oder fluidabführenden Rohr aufweist. Eine Anordnung des Verbindungsmittels und somit der Durchführungen in einem Gewindebereich des Messkanals kann jedoch nachteilig bzw. technisch aufwendig sein. Eine von dem Schwingkörper beabstandete Kontaktierung kann dieses Problem vermeiden.

Allgemein können durch das beschriebene Vorgehen Bauraumkonflikte vermieden werden, indem die Position der Durchführung und somit des Verbindungsmittels bis zu einem gewissen Grad flexibel gewählt werden kann. Somit können beispielsweise Bauraumkonflikte bezüglich Gewindebereichen, Halterungen oder einem Gehäuse für die Steuereinrichtung oder für weitere Messelektronik vermieden werden.

Das aktive Material kann insbesondere ein piezoelektrisches Material, beispielsweise eine Piezokeramik, oder allgemein ein Material sein, dass durch ein Anlegen von Spannungen bzw. elektrischen Feldern, Temperaturänderungen oder Ähnliches zu Formwechseln bzw. Schwingungen anregbar ist. Insbesondere bei der Nutzung wenigstens eines Kontaktabschnitts, der über den Schwingkörper hinausragt, kann es vorteilhaft sein, den Schwingkörper und/oder den Kontaktabschnitt durch einen zusätzlich zu dem Schwingungswandler im Wandlergehäuse angeordneten Halter zu stützen.

In dem Messkanal kann ein Messeinsatz angeordnet sein, der den Strömungsquerschnitt des Messkanals verengt und/oder der wenigstens ein Element zur Reflexion der Druckwelle und/oder zur Beeinflussung der Fluidströmung ausbildet oder trägt, wobei das jeweilige Wandlergehäuse an dem Messeinsatz angebracht ist. Soll die Erfassung der Druckwelle durch einen weiteren Schwingungswandler erfolgen bzw. werden allgemein mehrere Schwingungswandler der Messeinrichtung genutzt, können alle Wandlergehäuse, die einen jeweiligen Schwingungswandler aufnehmen, an dem Messeinsatz angebracht sein oder zumindest die Wandlergehäuse von zwei Schwingungswandlern, die einerseits die Druckwelle anregen und andererseits erfassen.

Wie bereits obig erläutert wurde, kann im Rahmen der Herstellung der Messeinrichtung bereits wenigstens ein Wandlergehäuse an dem Messeinsatz angebracht sein und dann gemeinsam mit diesem in den Messkanal eingebracht werden. Hierdurch kann die Herstellung der Messeinrichtung weiter vereinfacht werden. Zudem kann das Anbringen des Wandlergehäuses an dem Messeinsatz ermöglichen, dass die Position und Orientierung des Messeinsatzes durch die Verbindung des Wandlerhäuses mit dem Messkanal festgelegt wird.

In dem Messkanal kann ein Wellenleiter angeordnet sein, wobei der Schwingungswandler derart an einem Endabschnitt des Wellenleiters angebracht ist, dass durch einen Betrieb des Schwingungswandlers eine geführte Welle in dem Wellenleiter anregbar ist, wobei der Endabschnitt des Wellenleiters durch eine weitere Öffnung des Wandlergehäuses in dieses eingeführt ist, um den Schwingungswandler in diesem Wandlergehäuse anzuordnen. Insbesondere können der Schwingungswandler und der weitere Schwingungswandler an gegenüberliegenden Endabschnitten des gleichen Wellenleiters angebracht sein oder an Endabschnitten verschiedener Wellenleiter angebracht sein und jeweils auf die oben genannte Weise in dem jeweiligen Wandlergehäuse angeordnet werden. Weitere Details und Vorteile der Nutzung eines Wellenleiters, um die Druckwellen im Fluid indirekt durch geführte Wellen im Wellenleiter anzuregen, wurden bereits obig zum erfindungsgemäßen Verfahren erläutert.

Der Wellenleiter kann die weitere Öffnung gewinkelt in einem Winkel zwischen 45° und 135°, insbesondere in einem Winkel zwischen 70° und 110° oder zwischen 80° und 100°, vorzugsweise im Wesentlichen senkrecht, zu jener Richtung durchsetzen, in der das Verbindungsmittel in die Öffnung dieses Wandlergehäuses eingesetzt ist, und/oder zu jener Richtung, in der sich der den Schwingungswandler kontaktierende Leiter durch die Durchführung erstreckt. Anders ausgedrückt können die Öffnung und die weitere Öffnung des Wandlergehäuses um den genannten Winkel zueinander versetzt sein. Dies ermöglicht es, den Schwingungswandler samt Wellenleiter im Gehäuse so zu positionieren, dass die elektrischen Kontakte des Schwingungswandlers, oder in dem Fall, dass mehrere Schwingungswandler im gleichen Gehäuse angeordnet werden, der Schwingungswandler im Wesentlichen parallel zu Montagerichtung des Verbindungsstücks liegen und somit der beispielsweise als Federkontakt ausgebildete elektrische Leiter, beispielsweise durch das obig beschriebene keilförmige Anpresselement, unmittelbar auf den elektrischen Kontakt gedrückt werden kann oder umgekehrt.

Im Bereich des elektrischen Kontakts kann eine Paste zum Schutz des elektrischen Kontakts bzw. allgemein der leitenden Elemente vor Feuchtigkeit angeordnet sein. Ergänzend oder alternativ kann der jeweilige elektrische Kontakt eine Beschichtung aus Edelmetall aufweisen. Ergänzend oder alternativ kann der elektrische Leiter zumindest in dem Bereich, in dem er den elektrischen Kontakt kontaktiert, eine Beschichtung aus Edelmetall aufweisen.

Obwohl, wie obig erläutert, vorzugsweise ein fluiddichter Abschluss des Wandlergehäuses gegenüber dem Fluidvolumen erreicht wird, kann bei Klemmkontakten dennoch, beispielsweise aufgrund von Umgebungsfeuchtigkeit, ein gewisses Oxidationsrisiko gegeben sein, das zu einer Reduzierung der Lebenszeit der Messeinrichtung oder unter Bestanden zu einer Verringerung der Messgenauigkeit führen könnte. Dies kann durch Nutzung der schützenden Paste oder einer geeigneten Beschichtung vermieden werden. Beispielsweise kann das Wandlergehäuse zumindest teilweise mit der Paste verfüllt sein, wobei diese im Rahmen der Herstellung beispielsweise über die Durchführung des Verbindungselements eingefüllt werden kann, sodass eine zuvor erfolgte Kontaktierung des elektrischen Kontakts durch den Leiter nicht durch die Paste gestört wird. Prinzipiell wäre es jedoch auch möglich, eine entsprechende Paste bereits vor der elektrischen Kontaktierung bzw. dem Einführen des Leiters in das Wandlergehäuse in dem Wandlergehäuse anzuordnen und diese bei der Kontaktierung durch den Leiter zu verdrängen. Die Paste kann dazu dienen, Feuchtigkeit abzuweisen bzw. nicht eindringen zu lassen. Als Paste kann beispielweise Polytetrafluorethylen (PTFE) oder eine andere Fluorverbindung genutzt werden. Als Edelmetall zur Beschichtung kann beispielsweise Gold oder Silber verwendet werden.

Weitere Vorteile und Einzelheiten der vorliegenden Erfindung ergeben sich aus den im Folgenden beschriebenen Ausführungsbeispielen sowie anhand der Zeichnungen. Dabei zeigen schematisch:
- Fig. 1: ein Ausführungsbeispiel einer erfindungsgemäßen Messeinrichtung, die gemäß einem Ausführungsbeispiel des erfindungsgemäßen Verfahrens herstellbar ist,
- Fig. 2: eine Detailansicht zur Kontaktierung eines Schwingungswandlers in dem in Fig. 1 gezeigten Ausführungsbeispiel,
- Fig. 3 und 4: weitere Ausführungsbeispiele erfindungsgemäßer Messeinrichtungen, die durch ein Ausführungsbeispiel des erfindungsgemäßen Verfahrens herstellbar sind,
- Fig. 5: eine Detailansicht zur Kontaktierung des Schwingungswandlers in den in Fig. 3 und 4 gezeigten Ausführungsbeispielen,
- Fig. 6-9: verschiedene Ansichten eines weiteren Ausführungsbeispiels einer erfindungsgemäßen Messeinrichtung, die durch ein Ausführungsbeispiel des erfindungsgemäßen Verfahrens herstellbar ist, und
- Fig. 10: eine geschnittene Ansicht eines weiteren Ausführungsbeispiels einer erfindungsgemäßen Messeinrichtung.

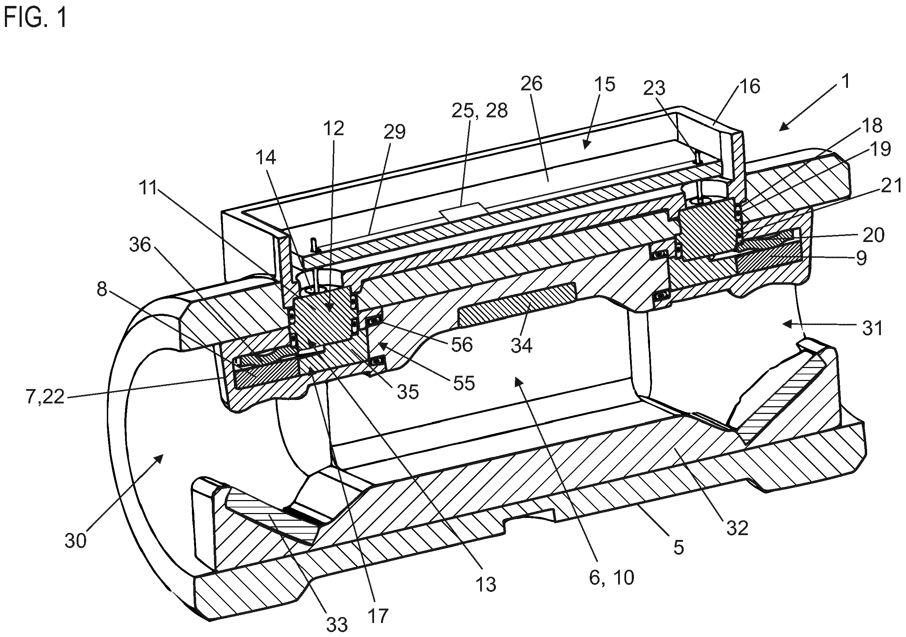

Fig. 1 zeigt eine Messeinrichtung 1, die zur Erfassung einer Fluidgröße, beispielsweise einer Durchflussgeschwindigkeit bzw. eines Durchflussvolumens, dient. Das Fluid wird in dem Messkanal 5 von einem Fluideinlass 30 zu einem Fluidauslass 31 geführt. Um beispielsweise eine Durchflussgeschwindigkeit zu messen, kann eine Druckwelle über den Schwingungswandler 8 in das Fluid abgestrahlt werden und nach Reflexionen durch die Elemente 33, 34 über den weiteren Schwingungswandler 9 empfangen werden. Wird dies in umgekehrte Richtung wiederholt, so kann aus dem Laufzeitenunterschied für die verschiedenen Ausbreitungsrichtungen eine Durchflussgeschwindigkeit und somit bei bekannter Messgeometrie auch eine Durchflussvolumen bestimmt werden. Dieser Ansatz zur Durchflussmessung ist an sich wohl bekannt und soll daher nicht detailliert erläutert werden. Alternativ oder ergänzend zur Durchflussmessung können andere Fluideigenschaften bestimmt werden, beispielsweise indem die Summe der Laufzeit in beide Richtungen ausgewertet wird, anhand der beispielsweise eine Schallgeschwindigkeit im Fluid bzw. eine die Schallgeschwindigkeit beeinflussende Größe bestimmt werden kann.

Ein üblicher Ansatz zur Herstellung entsprechender Messeinrichtungen ist es, die Schwingungswandler 8, 9 vom Außenraum 15 her in Durchbrechungen des Messkanals 5 einzusetzen. Dies setzt jedoch der Messgeometrie bzw. der Ausgestaltung der Schwingungswandler 8, 9 enge Grenzen, weshalb es gewünscht sein kann, eine größere Flexibilität bezüglich der Ausgestaltung der Schwingungswandler 8, 9 und ihrer Anordnung zu erreichen. Beispielsweise sind die Schwingungswandler 8, 9 in dem in Fig. 1 gezeigten Beispiele recht nahe am Fluideinlass 30 bzw. Fluidauslass 31 im Bereich eines jeweiligen Gewindes angeordnet. Dies ermöglicht zwar, die Messeinrichtung 1 sehr kurzbauend zu gestalten und dennoch eine gute Messgenauigkeit zu erreichen. Ein unmittelbares einsetzen der Schwingungswandler 8, 9 in Durchbrechungen der Kanalwand des Messkanals 5 ist in diesem Fall jedoch nicht ohne weiteres möglich.

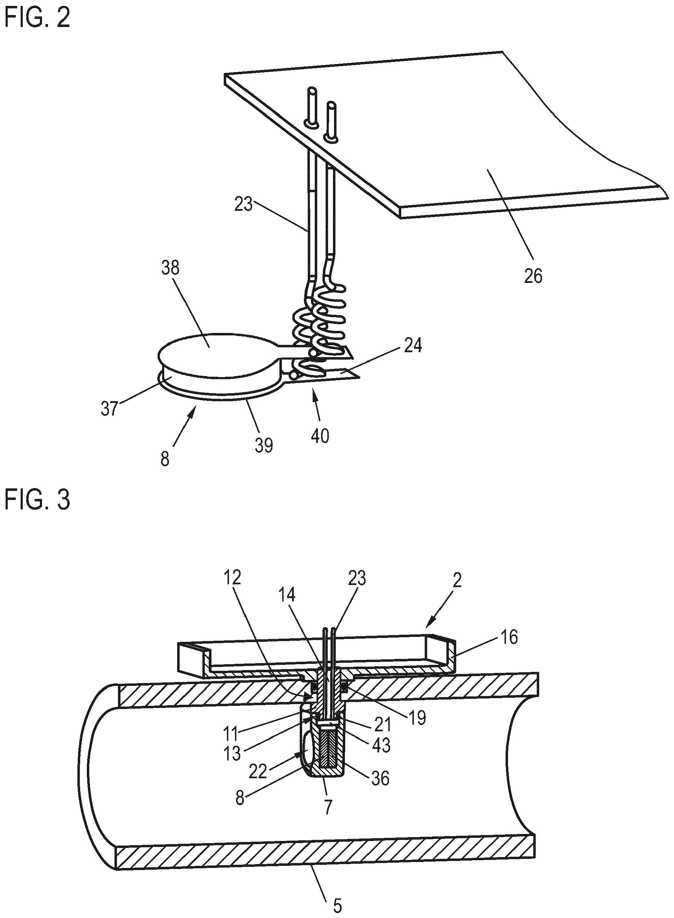

Die in Fig. 1 gezeigte Messeinrichtung 1 nutzt daher einen abweichenden Aufbau und wird durch ein abweichendes Herstellungsverfahren hergestellt. Die Schwingungswandler 8, 9 werden hierbei jeweils in dem Innenraum 17 eines jeweiligen Wandlergehäuses 7 angeordnet, das wiederum in dem Innenraum 10 des Messkanals 5 angeordnet ist. Das jeweilige Wandlergehäuse 7 wird mit dem Messkanal 5 dadurch verbunden, dass eine jeweiliges Verbindungsmittel 11 derart einerseits in eine jeweilige Durchbrechung 12 des Messkanals 5 und andererseits in einer Öffnung 13 des jeweiligen Wandlergehäuses 7 eingesetzt ist, dass wenigstens eine Durchführung 14 des jeweiligen Verbindungsmittels 11, die einen außerhalb des Messkanals 5 gelegenen Außenraum 15 mit dem Innenraum 17 des jeweiligen Wandlergehäuses 7 verbindet, gegenüber dem Fluidvolumen 6 fluiddicht abgedichtet ist. Dies wird im gezeigten Beispiel dadurch erreicht, dass das Verbindungsmittel 11 derart mit dem Messkanal 5 und dem Wandlergehäuse 7 verbunden wird, dass einerseits ein Zwischenraum 18 zwischen der Außenwand des Verbindungsmittels 11 und der Durchbrechung 12 des Messkanals 5 durch ein Messkanaldichtmittel 19 fluiddicht verschlossen wird und dass andererseits ein Zwischenraum 20 zwischen der die Öffnung 13 des Wandlergehäuses 7 begrenzenden Gehäusewand 22 und der Außenwand des Verbindungsmittels 11 durch ein Gehäusedichtmittel 21 fluiddicht verschlossen wird. Dies ermöglicht es, einen elektrischen Leiter 23 über die Durchführung 14 in den Innenraum 17 des Wandlergehäuses 7 zu führen, um einen elektrischen Kontakt des jeweiligen Schwingungswandlers 8, 9 zu kontaktieren. Details dieser Kontaktierung sind aus Übersichtlichkeitsgründen separat in Fig. 2 am Beispiel des Schwingungswandlers 8 dargestellt.

Wie durch eine Zusammenschau von Fig. 1 und 2 gut zu erkennen ist, werden die elektrischen Kontakt 24, über die die Elektroden 38, 39 des Schwingungswandlers 8 kontaktiert werden, so angeordnet, dass sie in der unmittelbaren Verlängerung von zwei Durchführungen 14, von denen in Fig. 1 nur eine dargestellt ist, des Verbindungsmittels 11 liegen. Der jeweilige elektrische Leiter 23 kann somit durch eine lineare Verschiebung in Einschubrichtung, also parallel zur Erstreckung der Durchführung 14, mit den jeweiligen elektrischen Kontakt 24 in Kontakt gebracht werden.

Dies ermöglicht es, dass im Rahmen der Herstellung der Messeinrichtung 1 der jeweilige elektrische Leiter 23 erst mit oder bevorzugt nach dem Einsetzen des Verbindungsmittels 11 in die Öffnung 13 des Wandlergehäuses 7 in den Innenraum 17 des Wandlergehäuses 7 eingeführt wird, um dort den elektrischen Kontakt 24 zu kontaktieren. Im gezeigten Beispiel ist es beispielsweise möglich, dass die elektrischen Leiter 23 bereits in einem Vorbereitungsschritt stiftartig an einer Leiterplatte angebracht werden, die wie später noch erläutert werden wird, ein Anpresselement 26 bildet und die beispielsweise die Steuereinrichtung 25 bzw. ein diese ausbildendes Bauteil 28 trägt und die Leiterbahnen 29 zur Kontaktierung der elektrischen Leiter 23 ausbildet. Wird diese Leiterplatte nun senkrecht zu ihrer Oberfläche in das Gehäuses 16, das zur Aufnahme der Messelektronik dient, eingesetzt, werden hierbei gleichzeitig die elektrischen Leiter 23 durch die jeweiligen Durchführungen 14 geführt und auf jeweilige elektrische Kontakte 24 gepresst.

Wird die Leiterplatte nun durch nicht dargestellte Befestigungsmittel in dem Gehäuse 16 befestigt, führt dies dazu, dass durch die Leiterplatte eine Anpresskraft aufgebracht wird, durch die der jeweilige Leiter 23 auf den elektrischen Kontakt 24 gepresst wird, womit die Leiterplatte als Anpresselement 26 wirkt, das im Außenraum 15 angeordnet ist. Die Nutzung eines im Außenraum 15 angeordneten Anpresselements 26 zur Herstellung eines robusten Kontakts zwischen Leiter 23 und elektrischem Kontakt 24 ist vorteilhaft, da die Kontaktierung der Schwingungswandler 8, 9 in diesem Fall erfolgen kann, ohne das durch Werkzeuge in den Innenraum 17 des Wandlergehäuses 7 eingegriffen werden muss, was die Herstellung der Messeinrichtung 1 erheblich vereinfacht.

Um einen definierten Anpressdruck zwischen dem jeweiligen Leiter 23 und dem jeweiligen elektrischen Kontakt 24 zu erreichen kann es ausreichend sein, eine Leiterplatte oder ein anderes im Außenraum 15 angeordnetes Anpresselement 26 zu nutzen, das zu einem gewissen Grad elastisch verformbar ist und/oder die elektrischen Kontakte 24 elastisch auszubilden, beispielsweise durch Nutzung von elastischer verformbaren Elektroden 38, 39, die einen Schwingkörper 37 aus aktiven Material kontaktieren. Ein besonders robuster Kontakt kann jedoch beispielsweise erreicht werden, indem, wie im Fig. 2 schematisch dargestellt ist, Leiter 23 genutzt werden, die zumindest abschnittsweise als Schraubenfeder geformt sind.

Wie in Fig. 1 und 2 eindeutig zu erkennen ist, sind die Schwingungswandler 8, 9 bzw. ihre Schwingkörper 37, die aus einem aktiven, beispielsweise piezoelektrischen, Material bestehen, in Strömungsrichtung gegenüber den Durchführungen 14 versetzt, wodurch es beispielsweise, wie obig erläutert, möglich ist, die Schwingungswandler 8, 9 im Bereich von Gewinden zur Verbindung des Messkanals 5 mit weiteren Komponenten anzuordnen. Die Verlegung der elektrischen Kontakte 24 in die Verlängerung der Durchführungen 14 wird, wie in Fig. 2 gezeigt ist, dadurch erreicht, dass die Elektroden 38, 39 sich deutlich über den Schwingkörper 37 hinausstrecken, wobei der jeweilige elektrische Leiter 23 den jeweiligen elektrischen Kontakt 24 in einem Kontaktabschnitt 40 kontaktiert, der von dem Schwingkörper 37 beabstandet ist, im Beispiel in Strömungsrichtung.

Insbesondere bei einer solchen vom Schwingkörper 37 beabstandeten Kontaktierung kann es vorteilhaft sein, die Elektroden 38, 39 im Kontaktabschnitt 40 zu stützen und optional auch den Schwingkörper 37 seitlich abzustützen. Hierzu kann im Innenraum 17 des Wandlergehäuses 7 zusätzlich ein Halter 35 angeordnet sein. Um zudem den Schwingungswandler 8 robust mit dem Abschnitt der Gehäusewand 22 des Wandlergehäuses 7 zu koppeln, über den eine Abstrahlung der Druckwelle erfolgen soll bzw. von wenigstens einem weiteren Abschnitt der Gehäusewand 22 zu entkoppeln, kann auf der Rückseite des Schwingungswandlers 8,9 ein Feder- oder Dämpfelement 36 angeordnet sein, das separat von dem Halter 35 oder als Teil hiervon ausgebildet sein kann. Zudem kann sich in dem Innenraum 17 eine Paste befinden, um den elektrischen Kontakt 24 vor Oxidation zu schützen. Beispielsweise kann diese Paste vor oder nach dem Einführen des elektrischen Leiters 23 in den Innenraum 17 eingefüllt werden.

Wie später noch mit Bezug auf Fig. 3 bis 5 erläutert werden wird, ist es prinzipiell möglich, die Schwingungswandler 8, 9 bzw. die weiteren im Innenraum 17 angeordneten Komponenten über die Öffnung 13 des Wandlergehäuses 7 in dieses einzufügen, die später durch das Verbindungsmittel 11, abgesehen von der Durchführung 14 bzw. den Durchführungen 14, verschlossen wird. Dies wäre bei der in Fig. 1 gezeigten Ausgestaltung der Messeinrichtung 1 jedoch relativ aufwändig, sodass dort eine weitere Öffnung 55 genutzt wird, um diese Gegenstände in den Innenraum 17 des Wandlergehäuses 7 einzuschieben, wodurch dieses Einfügen in einem einfachen, gut automatisierbaren Herstellungsschritt ermöglicht wird. die weitere Öffnung 55 wird dadurch verschlossen, dass das Wandlergehäuse 7 mit dem Messeinsatz 32 verbunden wird, der den Strömungsquerschnitt des Messkanals 5 verengt und die Elemente 33, 34 zur Reflexion der Druckwelle trägt. Wie in Fig. 1 zu erkennen ist, verschließt ein Vorsprung des Messeinsatzes 32, der in die Öffnung 55 eingreift, diese gemeinsam mit dem Dichtmittel 56 fluiddicht.

Das Anbringen der beiden Wandlergehäuse 7 an dem Messeinsatz 32 erfolgt vorzugsweise vor dem Anordnen der Wandlergehäuse 7 in den Innenraum 10 des Messkanals 5. Die Wandlergehäuse 7 können somit gemeinsam mit dem Messeinsatz 32, insbesondere über den Fluideinlass 30 bzw. den Fluidauslass 31, in den Messkanal 5 eingeschoben werden. Nach der Positionierung des Messeinsatzes 32 können die Verbindungsmittel 11 durch die Durchbrechung 12 des Messkanals 5 in die Öffnungen 13 der Wandlergehäuse 7 eingesetzt werden, um diese positionsfest zu fixieren. Aufgrund der Verbindung mit dem Messeinsatz 32 kann hierdurch auch die Position und Orientierung des Messeinsatzes 32 eindeutig festgelegt werden.

Fig. 3 zeigt eine Messeinrichtung 2, die gegenüber der vorrangehend diskutierten Messeinrichtung 1 in einigen Punkten abgewandelt ist. Da dennoch weitgehend die gleichen Ansätze zur Herstellung und Auslegung der Messeinrichtung 2 genutzt werden, wie dies für die Messeinrichtung 1 der Fall war, werden im Folgenden primär die Unterschiede diskutiert. Insbesondere werden im Wesentlichen funktionsgleiche Komponenten in Fig. 3 und den folgenden Figuren mit den gleichen Bezugszeichen bezeichnet wie in Fig. 1 und 2 und Ihre Funktion wird nur erläutert, soweit dies zum besseren Verständnis der zusätzlichen bzw. veränderten Merkmale zweckmäßig ist.

Grundsätzlich wird, wie bereits in der Messeinrichtung 1, einen Schwingungswandler 8 genutzt, der in einem Wandlergehäuse 7 angeordnet ist, welches in dem Innenraum des Messkanals 5 angeordnet ist. Der gezeigte Aufbau ermöglicht es zudem, wie bereits in der Messeinrichtung 1, die Leiter 23 erst dann durch die Durchführung 14 des Verbindungsmittels 11 hindurchzuführen und somit den Schwingungswandler 8 zu kontaktieren, nachdem das Wandlergehäuse 7 über das Verbindungsmittel 11 an dem Messkanal 5 angebracht ist, wobei durch das Messkanaldichtmittel 19 und das Gehäusedichtmittel 21 die Durchführung 14 gegenüber dem Fluidraum abgedichtet ist. Ein Anpresselement 26, dass die Leiter 23 mit einer Presskraft beaufschlagt, ist in Fig. 3 nicht explizit dargestellt. Beispielsweise könnte, wie bereits in der Messeinrichtung 1, eine Leiterplatte genutzt werden oder die Leiter 23 können auf anderer Weise, beispielsweise durch einen Deckel des Gehäuses 16, auf den jeweiligen elektrischen Kontakt 24 gepresst werden.

In Fig. 3 ist nur ein Schwingungswandler 8 dargestellt. Es ist hierbei möglich, dass außerhalb des Bildbereichs ein weiterer Schwingungswandler 9 vorhanden ist, um Messungen wie zur Messeinrichtung 1 erläutert durchzuführen. Alternativ könnte jedoch auch eine Reflexion der abgestrahlten Druckwellen an einem nicht dargestellten Reflexionselement genutzt werden, das es ermöglicht, die abgestrahlten Druckwellen zu einem späteren Zeitpunkt über den gleichen Schwingswandler 8 erneut zu erfassen.

Die gezeigte Ausgestaltung des Wandlergehäuses 7 ermöglicht es, den Schwingungswandler 8 sowie ein Dämpfelement 36 über jene Öffnung 13 des Wandlergehäuses 7 in dieses einzuführen, die durch das Einführen des Verbindungsmittels 11 verschlossen und das Gehäusedichtmittel 21 abgedichtet wird. hierdurch kann eine besonders einfache und robuste Abdichtung des Innenraums 17 des Wandlergehäuses 7 und der Durchführung 14 erreicht werden.

Der Schwingungswandler 8 kontaktiert einen Abschnitt der Gehäusewand 22, dessen Dicke variiert um eine konkave Seitenfläche auszubilden, über die eine Ausrichtung und Fokussierung der abgestrahlten Druckwelle erfolgen kann. Um eine Abstrahlung im Wesentlichen ausschließlich in die gewünschte Richtung, d.h. in Fig. 3 nach links, zu erreichen, ist der Schwingungswandler 8 über ein an seiner Rückseite angeordnetes Dämpfelement 36 von dem in Fig. 3 rechts liegenden Abschnitt der Gehäusewand 22 des Wandlergehäuses 7 zumindest weitgehend entkoppelt.

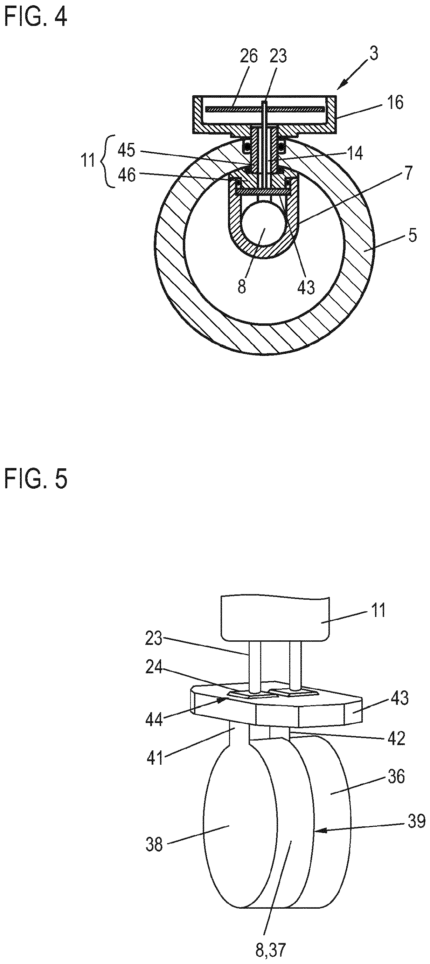

Details zur Kontaktierung des Schwingungswandlers 8 in der Messeinrichtung 2 sind in Fig. 5 dargestellt. Ähnlich wie bereits zur Messeinrichtung 1 erläutert, sind die Leiter 23 geradlinig durch das Verbindungsmittel 11 bzw. durch dessen Durchführung 14 geführt und kontaktieren einen jeweiligen elektrischen Kontakt 24, der in geradliniger Verlängerung der Durchführung 14 angeordnet ist. Die Elektroden 38, 39 des Schwingungswandlers 8 bzw. diese verlängernde Kontaktbleche 41, 42 sind in Hochrichtung in Fig. 5 durch schmale Spalte 44 eine Stützplatte 43 geführt und anschließend um ungefähr 90° gebogen, um flächig auf der Stützplatte 43 aufzuliegen. Hierdurch wird die in Fig. 5 gezeigte Konfiguration erreicht. Es ist hierbei insbesondere möglich, federelastische Kontaktbleche 41, 42 zu nutzen und diese in einem leicht stumpfen Winkel, also etwas weniger als in Fig. 5 gezeigt, zu biegen, sodass diese vor dem Aufsetzen der elektrischen Leiter 23 etwas von der Stützplatte 43 abstehen, sodass nachdem Aufsetzen der Leiter 23 durch eine durch die Kontaktbleche 41, 42 aufgebrachte elastische Rückstellkraft die elektrischen Kontakt 24 gegen die Leiter 23 gedrückt werden.

In der in Fig. 3 gezeigten Messeinrichtung 2 muss das Verbindungsmittel 11 von Innenseite des Messkanals 5 durch die Durchbrechung 12 des Messkanals 5 geführt werden. Dies kann in einigen Fällen die Herstellung der Messeinrichtung 2 verkomplizieren, insbesondere wenn das Wandlergehäuse 7 vor dem Einbringen in den Innenraum des Messkanals 5 an einem Messeinsatz angeordnet werden soll, wie dies mit Bezug zur Messeinrichtung 1 erläutert wurde.

Um dennoch ein befestigen des Wandlergehäuses 7 durch einen Eingriff von dem Außenraum 15 her zu ermöglichen, könnte im einfachsten Fall die Form des Verbindungsmittels 11 derart variiert werden, dass der im Inneren des Messkanals anzuordnende Teil schmaler ausgebildet wird und somit durch die Durchbrechung 12 hindurchgeführt werden kann.

Alternativ wäre es jedoch auch möglich, das Verbindungsmittel 11 durch zwei Verbindungselemente 45, 46 zu bilden, wie es in Fig. 4 dargestellt ist. Der Aufbau der in Fig. 4 dargestellten Messeinrichtung 3 entspricht hierbei abgesehen von dem nun explizit dargestellten Anpresselement 26 und der Aufteilung des Verbindungsmittels 11 in die beiden Verbindungselemente 45, 46 dem Aufbau der in Fig. 3 gezeigten Messeinrichtung 2. Im Gegensatz zu Fig. 2 ist jedoch ein Schnitt senkrecht zur Strömungsrichtung des Fluids dargestellt.

Die Verbindungselemente 45, 46 sind, im gezeigten Beispiel durch ein Dichtmittel, z.B. durch einen O-Ring, fluiddicht miteinander verbunden, sodass die gleiche Funktionalität des Verbindungsmittels 11 erreicht wird, wie dies in der Messeinrichtung 2 der Fall ist. Die Zweiteilung des Verbindungsmittels 11 hat den Vorteil, dass im Rahmen der Herstellung der Messeinrichtung 3 zunächst das Verbindungselement 46 in die Öffnung des Wandlergehäuses 7 eingeführt werden kann, wonach das Wandlergehäuse 7 mit dem daran angebrachten Verbindungselement 46 in den Innenraum des Messkanals 5 eingeführt werden kann, wonach das Verbindungselement 45 von außerhalb des Messkanals 5 durch die Durchbrechung des Messkanals geführt werden kann, um die Verbindungselemente 45, 46 zum Verbindungsmittel 11 zu verbinden. Dies kann die Herstellung vereinfachen, insbesondere wenn das Wandlergehäuse zunächst an einem Messeinsatz angebracht werden soll und dann gemeinsam mit diesem in den Messkanal eingeführt werden soll.

Der Vollständigkeit halber wird darauf hingewiesen, dass das in Fig. 4 gezeigte Ausführungsbeispiel prinzipiell auch so ausgelegt werden könnte, dass das Verbindungselement 46 als Teile des Wandlergehäuses 7 betrachtet wird und das Verbindungsmittel 11 ausschließlich durch das Verbindungselement 45 gebildet wird. Im Rahmen der Auslegung von Messeinrichtungen kann es jedoch gewünscht sein, dass Wandlergehäuse 7 einstückig auszuführen, sodass es in diesem Fall zweckmäßig ist, die Verbindungselemente 45, 46 gemeinsam als Verbindungsmittel 11 zu betrachten.

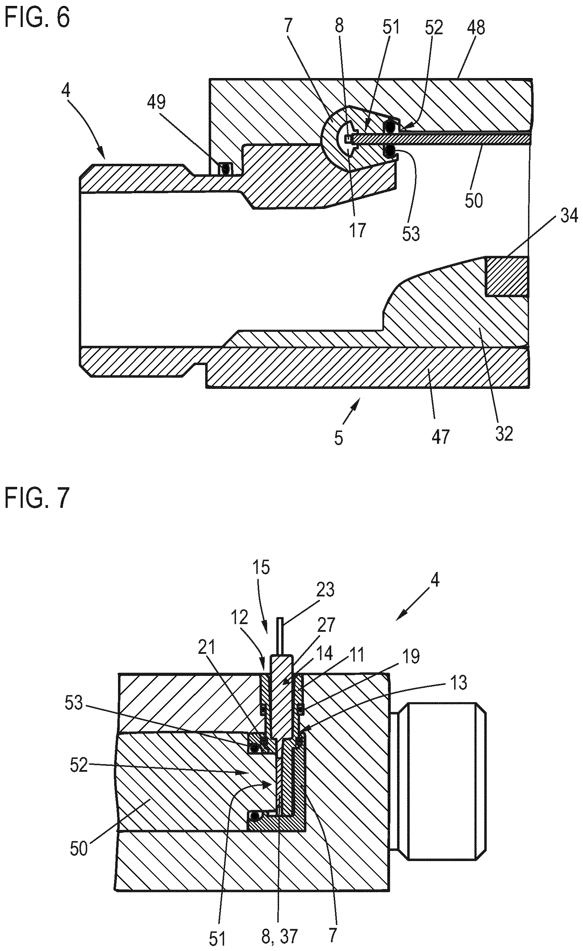

Wie bereits im allgemeinen Teil der Beschreibung diskutiert wurde, kann es vorteilhaft sein, statt einer direkten Anregung von Druckwellen über die Schwingungswandler 8, 9 eine indirekte Anregung von Druckwellen zu nutzen, bei der zunächst geführte Wellen, insbesondere Lamb-Wellen, in einem Wellenleiter 50 angeregt werden, der mit dem Fluid in Kontakt steht und somit bei geeigneten Anregungsparametern wiederum Druckwellen im Fluid anregen kann bzw. in dem durch Druckwellen im Fluid geführte Wellen angeregt werden können, die wiederum zu dem mit dem Wellenleiter gekoppelten Schwingungswandler 8, 9 geführt werden können. Eine mögliche Ausgestaltung einer solchen Messeinrichtung 4 wird im Folgenden mit Bezug auf die Figuren 6-9 erläutert.

Hierbei zeigt Fig. 6 eine Detailansicht eines Schnitts parallel zur Strömungsrichtung, wobei aus Übersichtlichkeitsgründen ein Zwischenzustand bei der Herstellung der Messeinrichtung 4 gezeigt ist, in dem das Verbindungsmittel 11 noch nicht angebracht ist und der Schwingungswandle 8 noch nicht kontaktiert ist. Die Herstellung dieses Zustandes kann erfolgen, indem zunächst der Schwingungswandler 8 an dem Wellenleiter 50 angebracht, beispielsweise an diesen angeklebt, wird.

Im gezeigten Beispiel ist der Schwingungswandler 8 an einer Stirnfläche des Wellenleiters 50 angebracht. Wie bereits im allgemeinen Teil der Beschreibung erläutert wurde, kann in diesem Fall durch geeignete Polarisierung des aktiven Materials des Schwingungswandlers 8 eine weitgehend modenreine Anregung einer symmetrischen oder einer asymmetrischen Lamb-Welle erreicht werden.

In alternativen Ausgestaltungen wäre es auch möglich, den Schwingungswandler auf der in Fig. 6 oberen oder unteren Oberfläche des Wellenleiters 50 anzubringen. Eine weitgehend modenreine Anregung könnte in diesem Fall beispielsweis dadurch erreicht werden, dass ein Interdigitaltransducer genutzt wird oder eine Anregung in mehreren voneinander beabstandeten Bereichen des Wellenleiters 50, beispielsweise durch separate Schwingelemente, genutzt wird, sodass durch Herstellung einer gezielten konstruktiven Indifferenz für eine gewünschte Mode bzw. einer gezielten destruktiven Indifferenz für eine nicht gewünschte Mode eine weitgehende Modenreinheit erreicht werden kann.

Wie insbesondere in Fig. 7 gut zu erkennen ist, die einen Schnitt parallel zur Ebene des Wellenleiters 50 zeigt, wird ein Wandlergehäuse 7 verwendet, das zwei Öffnungen 13, 52 aufweist, die 90° zueinander versetzt sind. Die Öffnung 13 dient zum späteren Einsetzen des Verbindungsmittels 11, während durch die Öffnung 52 ein Endabschnitt 51 des Wellenleiters 50 eingeführt wird, an den der Schwingungswandler 8 angebracht ist. Hierbei umgreift das Dichtmittel 53 den Wellenleiter 50, um die Öffnung 52 nach dem Einsetzen des Wellenleiters 50 abzudichten.

In der Messeinrichtung 4 wird ein zweiteiliger Messkanal 5 genutzt. Hierbei bildet ein unterer Messkanalteil 47 den Fluidein- und -auslass und trägt einen Messeinsatz 32, der beispielsweise ein Element 34 zur Reflexion der Druckwelle aufnehmen kann. Der Wellenleiter 50 mit dem daran angebrachten Wandlergehäuses 7 bzw. insbesondere mit an beiden Enden angebrachten Wandlergehäusen 7, die die Schwingungswandler 8, 9 aufnehmen, wird auf den unteren Messkanalteil 47 aufgelegt und der Messkanal wird durch Aufsetzen des oberen Messkanalteils 48 verschlossen und über ein Dichtmittel 49 abgedichtet. Die Befestigung der Messkanalteile 47, 48 aneinander kann beispielsweise durch Verschrauben, Vernieten, umlaufende Metallbänder oder Ähnliches erfolgen. Somit ist in dem in Fig. 6 gezeigten Zustand das Wandlergehäuse 7 mit dem darin angeordneten Schwingungswandler 8 in dem Innenraum des Messkanals 5 angebracht und dort robust gehaltert.

Die Geometrie des Messkanals 5 ist so gewählt, dass die Öffnung 13 des Wandlergehäuses 7 mit einer Durchbrechung 12 des Messkanals überlappt. Durch die Durchbrechung 12 und die Öffnung 13 wird dann, wie in Fig. 7 dargestellt ist, das Verbindungsmittel 11 derart eingeführt, dass eine Durchführung 14 für die Leiter 23 und das Anpresselement 27 den Außenraum 15 mit dem Innenraum 17 des Wandlergehäuses 7 verbindet. Die Abdichtung der Durchbrechung 12 und der Öffnung 13 erfolgt durch das Messkanaldichtmittel 19 und das Gehäusedichtmittel 21.

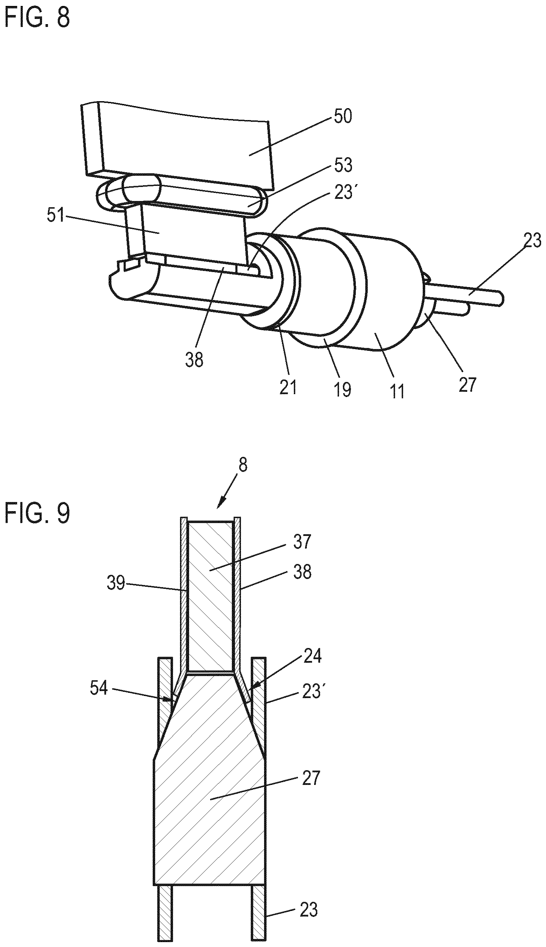

Die Kontaktierung des Schwingungswandlers 8 über die Leiter 23 wird im Folgenden mit Bezug auf die Figuren 8 und 9 erläutert. Hierbei zeigt Fig. 8 eine perspektivische Teilansicht des relevanten Verbindungsbereichs, wobei aus Übersichtlichkeitsgründen weder das Wandlergehäuse 7 noch der Messkanal 5 dargestellt sind. Die beiden Leiter 23 sind randseitig durch die Durchführung 14 des Verbindungsmittels 11 geführt und werden durch das zwischen den Leitern 23 angeordnete Anpresselement 27 voneinander beabstandet gehalten. Die Endabschnitte 23' der Leiter 23, die innerhalb des Wandlergehäuses 7 angeordnet sind, sind somit benachbart zu den Elektroden 38, 39 des Schwingungswandlers 8 angeordnet. Durch geeignete Formgebung des Verbindungsmittels 11 wird eine Abstützung des Schwingungswandlers 8 am Wandlergehäuse 7 erreicht.

Die Elektroden 38, 39 oder mit diesen verbundene Leiterbleche erstrecken sich in Querrichtung in Fig. 8 bzw. in Hochrichtung in Fig. 7 über den Schwingkörper 37 des Schwingungswandlers 8 hinaus und verlaufen zunächst im Wesentlichen parallel zu den Seitenflächen dieses Schwingkörpers 37. Um einen robusten Kontakt zwischen den Leitern 23 und den elektrischen Kontakten 24 der Elektroden 38, 39 herzustellen, wird ein Anpresselement 27 genutzt, das, wie in Fig. 9 dargestellt ist, Pressflächen 54 aufweist, die gewinkelt zu einer Einschubrichtung verlaufen, in der das Anpresselement 27 durch die Durchführung 14 geschoben wird, also gewinkelt zur Richtung der Durchführung 14. Dies führt dazu, dass, wie in Fig. 9 dargestellt ist, die freien Enden der Elektroden 38, 39 auseinander gedrückt und somit auf die Leiter 23 bzw. auf deren Endabschnitt 23' gedrückt werden.

Durch das beschriebene Vorgehen wird eine robuste Kontaktierung erreicht, wobei hierzu ausschließlich die Leiter 23 und das Anpresselement 27 von außen durch die Durchführung 14 des Verbindungsmittels 11 eingeführt werden müssen. Somit kann eine Kontaktierung durch einfache und gut automatisierbare lineare Bewegungen von Komponenten erreicht werden, ohne dass beispielsweise komplexe Manipulatoren genutzt werden müssen, die in das Wandlergehäuse 7 eingreifen.

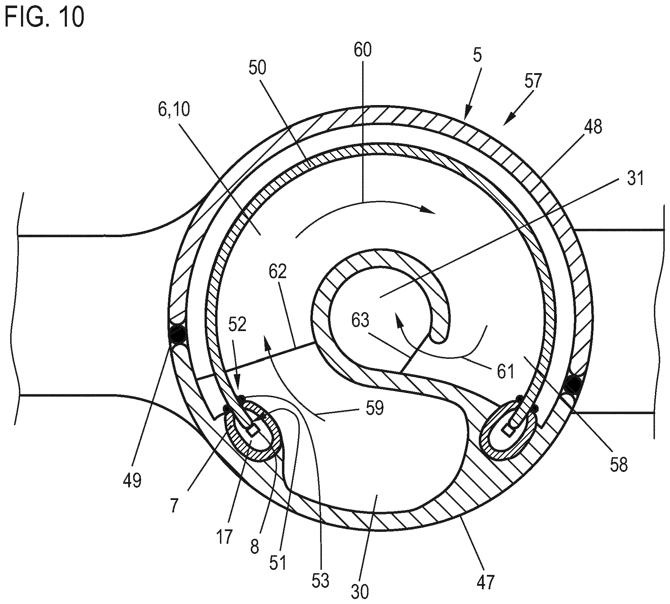

Die bisherigen Ausführungsbeispiele zeigen Messeinrichtungen 1 - 4, deren Messkanal 5 jeweils als gerades Messrohr ausgebildet ist. Wie bereits im allgemeinen Teil der Beschreibung erläutert, können jedoch auch andere Bauformen genutzt werden. Als Beispiel hierfür ist in Fig. 10 ein Messkapselzähler als Messeinrichtung 57 dargestellt, wobei der Messkanal 5 einen Innenraum 10 bzw. ein Fluidvolumen 6 begrenzt, dass den mittigen Fluidauslass 31 ungefähr torusförmig umläuft. Das Wasser strömt hierbei, wie durch den Pfeil 59 angedeutet ist, über eine Rampe 62 von einem Fluideinlass 30 in den Messbereich, durchströmt diesen oberhalb des Bodens 58, wie durch den Pfeil 60 dargestellt ist, und gelangt, wie durch den Pfeil 61 dargestellt ist, von dort über die Rampe 63 zum Fluidauslass 31.

Ähnlich wie in dem mit Bezug auf die Fig. 6 bis 9 diskutierten Ausführungsbeispiel wird der Messkanal 5 durch einen ersten Messkanalteil 47, z.B. die Messkapsel, und durch einen zweiten Messkanalteil 48, z.B. das Kapselgehäuse, gebildet, die über die Dichtungen 49 fluiddicht verbunden sind. Wie dort bereits erläutert, erfolgt eine indirekte Anregung von Fluidschwingungen über einen Wellenleiter 50, der über eine jeweilige Öffnung 51 in die den jeweiligen Wandlergehäuse 7 eingreift die die Schwingungswandler 8 aufnehmen. Abgesehen von der Krümmung des Messkanals 5 und der entsprechenden Krümmung des Wellenleiters 50 entspricht der Aufbau somit weitgehend dem bereits in Fig.6 dargestellten Aufbau. Entsprechend wird bezüglich weiterer Details auf die dortige Erläuterung verwiesen.

Wie dort bereits mit zusätzlichem Bezug auf die Fig. 7 - 9 erläutert wurde, kann die Kontaktierung der Schwingungswandler 7 dann mit Hilfe eines in Fig. 10 nicht dargestellten Verbindungsmittels erfolgen, dass durch eine Durchbrechung des Messkanals 5, insbesondere des Messkanalteils 47, hindurch senkrecht zur Bildebene in eine Öffnung des Wandlergehäuses 7 eingreift, um eine Durchführung für Leiter, die den Schwingungswandler 8 kontaktieren, vom Außenraum in den Innenraum 17 des Wandlergehäuses abzudichten. Zur Vermeidung von unnötigen Wiederholungen wird diesbezüglich auf die obigen Erläuterungen verwiesen.
- 34: Element
- 35: Halter
- 36: Dämpfelement
- 37: Schwingkörper
- 38: Elektroden
- 39: Elektroden
- 40: Kontaktabschnitt
- 41: Kontaktblech
- 42: Kontaktblech
- 43: Stützplatte
- 44: Spalt
- 45: Verbindungselement
- 46: Verbindungselement
- 47: Messkanalteil
- 48: Messkanalteil
- 49: Dichtmittel
- 50: Wellenleiter
- 51: Endabschnitt
- 52: Öffnung
- 53: Dichtmittel
- 54: Pressfläche
- 55: Öffnung
- 56: Dichtmittel
- 57: Messeinrichtung
- 58: Boden
- 59: Pfeil
- 60: Pfeil
- 61: Pfeil
- 62: Rampe
- 63: Rampe

## Patentansprüche

1. Verfahren zur Herstellung einer Messeinrichtung (1 - 4, 57), die zur Erfassung einer Fluidgröße dient, wobei die Fluidgröße ein Fluid, das in einem durch einen Messkanal (5) begrenzten Fluidvolumen (6) aufgenommen oder geführt wird, und/oder eine Fluidströmung dieses Fluids betrifft,
wobei ein Wandlergehäuse (7), in dessen Innenraum (8) ein Schwingungswandler (8, 9) angeordnet ist, in einem Innenraum (10) des Messkanals (5) angeordnet wird, der das Fluidvolumen (6) umfasst,
wobei das Wandlergehäuse (7) mit dem Messkanal (5) verbunden wird, indem ein Verbindungsmittel (11) derart einerseits in eine Durchbrechung (12) des Messkanals (5) und andererseits in eine Öffnung (13) des Wandlergehäuses (7) eingesetzt wird, dass wenigstens eine Durchführung (14) des Verbindungsmittels (11), die einen außerhalb des Messkanals (5) gelegenen Außenraum (15) mit dem Innenraum (17) des Wandlergehäuses (7) verbindet, gegenüber dem Fluidvolumen (6) fluiddicht abgedichtet,
wobei gemeinsam mit oder nach dem Einsetzen des Verbindungsmittels (11) in die Öffnung (13) des Wandlergehäuses (7) oder als Teilkomponente des Verbindungsmittels (11) wenigstens ein durch die Durchführung (14) geführter elektrischer Leiter (23) in den Innenraum (17) des Wandlergehäuses (7) eingeführt wird, durch den ein jeweiliger elektrischer Kontakt (24) des Schwingungswandlers (8, 9) kontaktiert wird, um diesen mit einer in dem Außenraum angeordneten Steuereinrichtung (25) der Messeinrichtung (1 - 4, 57) zu verbinden, **dadurch gekennzeichnet dass** der jeweilige Leiter (23) derart mit dem jeweiligen elektrischen Kontakt (24) verbunden wird, dass der Leiter (23) und der elektrische Kontakt (24) durch ein Anpresselement (26, 27) aufeinandergepresst werden, das in dem Außenraum (15) angeordnet ist oder das sich durch die oder eine weitere Durchführung (14) des Verbindungsmittels (11) von dem Innenraum (17) des Wandlergehäuses (7) in den Außenraum (15) erstreckt.

2. Verfahren nach Anspruch 1, **dadurch gekennzeichnet, dass** als das Anpresselement (26) eine Leiterplatte verwendet wird, die wenigstens ein elektrisch mit dem Leiter (23) verbundenes Bauteil (28) trägt und/oder wenigstens eine elektrisch mit dem Leiter (23) verbundene Leiterbahn (29) ausbildet.

3. Verfahren nach Anspruch 1, wobei sich das Anpresselement (27) durch die oder die weitere Durchführung (14) des Verbindungsmittels (11) in den Außenraum (15) erstreckt, **dadurch gekennzeichnet, dass** das Anpresselement (27) von dem Außenraum (15) aus in eine Einschubrichtung durch diese Durchführung (14) geschoben wird, wobei eine Pressfläche (54) des Anpresselements (27) derart gekrümmt ist oder gewinkelt zu der Einschubrichtung verläuft, dass sie bei dem Einschieben den elektrischen Kontakt (24) oder den Leiter (23) in Richtung senkrecht zur Einschubrichtung verschiebt oder verbiegt, um den elektrischen Kontakt (24) auf den Leiter (23) oder den Leiter (23) auf den elektrischen Kontakt (24) zu drücken.

4. Verfahren nach einem der vorangehenden Ansprüche, **dadurch gekennzeichnet, dass** das Verbindungsmittel (11) derart mit dem Messkanal (5) und dem Wandlergehäuse (7) verbunden wird, dass einerseits ein Zwischenraum (18) zwischen der Außenwand des Verbindungsmittels (11) und der Durchbrechung (12) des Messkanals (5) durch ein Messkanaldichtmittel (19) fluiddicht verschlossen wird und dass andererseits ein Zwischenraum (20) zwischen der die Öffnung (13) des Wandlergehäuses (7) begrenzenden Gehäusewand (22) und der Außenwand des Verbindungsmittels (11) durch ein Gehäusedichtmittel (21) fluiddicht verschlossen wird.

5. Verfahren nach einem der vorangehenden Ansprüche, **dadurch gekennzeichnet, dass** das Wandlergehäuse (7) durch einen Fluideinlass (30) oder einen Fluidauslass (31) des Messkanals (5) in diesen eingebracht wird.

6. Verfahren nach einem der vorangehenden Ansprüche, **dadurch gekennzeichnet, dass** der Schwingungswandler (8, 9) und/oder ein Dämpfelement (36), das zur zumindest teilweisen Entkopplung des Schwingungswandlers (8, 9) von einer Seitenwand des Wandlergehäuses (7) dient, über die Öffnung (13) des Wandlergehäuses (7) in das Wandlergehäuse (7) eingesetzt werden.

7. Verfahren nach einem der Ansprüche 1 bis 5, **dadurch gekennzeichnet, dass** in dem Messkanal (5) ein Wellenleiter (50) angeordnet wird, wobei der Schwingungswandler (8, 9) derart an einem Endabschnitt (51) des Wellenleiters (50) angebracht ist oder wird, dass durch einen Betrieb des Schwingungswandlers (8, 9) eine geführte Welle in dem Wellenleiter (50) anregbar ist, wobei der Endabschnitt (51) des Wellenleiters (50) durch eine weitere Öffnung (52) des Wandlergehäuses (7) in dieses eingeführt wird, um den Schwingungswandler (8) in dem Wandlergehäuse (7) anzuordnen, insbesondere bevor das Verbindungsmittel (11) in die Öffnung (13) des Wandlergehäuses (11) eingesetzt wird und/oder bevor der durch die Durchführung (14) geführte elektrischer Leiter (23) in den Innenraum (17) des Wandlergehäuses (7) eingeführt wird.

8. Messeinrichtung, die zur Erfassung einer Fluidgröße dient, wobei die Fluidgröße ein Fluid, das in einem durch einen Messkanal (5) begrenzten Fluidvolumen (6) aufgenommen oder geführt wird, und/oder eine Fluidströmung dieses Fluids betrifft, wobei die Steuereinrichtung (25) dazu eingerichtet ist, einen Schwingungswandler (8) der Messeinrichtung (1 - 4, 57) anzusteuern, um eine Druckwelle in dem Fluid anzuregen, von der Druckwelle abhängige Messdaten über den Schwingungswandler (8) oder einen weiteren Schwingungswandler (9) der Messeinrichtung (1 - 4, 57) zu erfassen und die Fluidgröße in Abhängigkeit der Messdaten zu ermitteln,
wobei der Schwingungswandler (8) und/oder der weitere Schwingungswandler (9) jeweils in dem Innenraum (17) eines jeweiligen Wandlergehäuses (11) angeordnet sind, das in einem Innenraum (10) des Messkanals (5) angeordnet ist, der das Fluidvolumen (6) umfasst,
wobei das jeweilige Wandlergehäuse (7) mit dem Messkanal (5) verbunden ist, indem ein jeweiliges Verbindungsmittel (11) derart einerseits in eine jeweilige Durchbrechung (12) des Messkanals (5) und andererseits in eine Öffnung (13) des jeweiligen Wandlergehäuses (7) eingesetzt ist, dass wenigstens eine Durchführung (14) des jeweiligen Verbindungsmittels (11), die einen außerhalb des Messkanals (5) gelegenen Außenraum (15) mit dem Innenraum (17) des jeweiligen Wandlergehäuses (7) verbindet, gegenüber dem Fluidvolumen (6) fluiddicht abgedichtet ist,
wobei wenigstens ein durch die Durchführung (14) geführter elektrischer Leiter (23) in den Innenraum (17) des jeweiligen Wandlergehäuses (7) geführt ist, durch den jeweils ein zugeordneter elektrischer Kontakt (24) des Schwingungswandlers (8) oder des weiteren Schwingungswandlers (9) kontaktiert wird, um diesen mit der in dem Außenraum (15) angeordneten Steuereinrichtung (25) der Messeinrichtung (1 - 4, 57) zu verbinden,
**dadurch gekennzeichnet,**
**dass** die Messeinrichtung (1 - 4, 57) ein Anpresselement (26, 27) umfasst, durch das der jeweilige Leiter (23) und der zugeordnete elektrische Kontakt (24) aufeinandergepresst werden, wobei das Anpresselement (26, 27) in dem Außenraum (15) angeordnet ist oder sich durch die oder eine weitere Durchführung (14) des Verbindungsmittels (11) von dem Innenraum (17) des Wandlergehäuses (6) in den Außenraum (15) erstreckt.

9. Messeinrichtung nach Anspruch 8, **dadurch gekennzeichnet, dass** der Schwingungswandler (8) und/oder der weitere Schwingungswandler (9) einen Schwingkörper (37) aus einem aktiven Material umfasst, wobei wenigstens einer der elektrischen Kontakte (24) des und/oder des weiteren Schwingungswandlers (8, 9) durch eine Elektrode (38, 39) des jeweiligen Schwingkörpers (37) oder ein diese Elektrode (38, 39) kontaktierendes Kontaktblech (41, 42) gebildet wird, wobei ein Kontaktabschnitt (40) dieser Elektrode (38, 39) oder dieses Kontaktblechs sich über diesen Schwingkörper (37) hinaus erstreckt, wobei der zugeordnete Leiter (23) die Elektrode (38, 39) oder das Kontaktblech (41, 42) in diesem Kontaktabschnitt (40) beabstandet von dem Schwingkörper (37) kontaktiert.

10. Messeinrichtung nach Anspruch 8 oder 9, **dadurch gekennzeichnet, dass** in dem Messkanal (5) ein Messeinsatz (32) angeordnet ist, der den Strömungsquerschnitt des Messkanals (5) verengt und/oder der wenigstens ein Element (33, 34) zur Reflexion der Druckwelle und/oder zur Beeinflussung der Fluidströmung ausbildet oder trägt, wobei das jeweilige Wandlergehäuse (7) an dem Messeinsatz (32) angebracht ist.

11. Messeinrichtung nach einem der Ansprüche 8 bis 10, **dadurch gekennzeichnet, dass** in dem Messkanal (5) ein Wellenleiter (50) angeordnet ist, wobei der Schwingungswandler (8) derart an einem Endabschnitt (51) des Wellenleiters (50) angebracht ist, dass durch einen Betrieb des Schwingungswandlers (8) eine geführte Welle in dem Wellenleiter (50) anregbar ist, wobei der Endabschnitt (51) des Wellenleiters (50) durch eine weitere Öffnung (52) des Wandlergehäuses (7) in dieses eingeführt ist, um den Schwingungswandler (8) in diesem Wandlergehäuse (7) anzuordnen.

12. Messeinrichtung nach Anspruch 11, **dadurch gekennzeichnet, dass** der Wellenleiter (50) die weitere Öffnung (52) gewinkelt in einem Winkel zwischen 45° und 135° zu jener Richtung durchsetzt, in der das Verbindungsmittel (11) in die Öffnung (13) dieses Wandlergehäuses (7) eingesetzt ist und/oder zu jener Richtung, in der sich der den Schwingungswandler (7) kontaktierende Leiter (23) durch die Durchführung (14) erstreckt.

13. Messeinrichtung nach einem der Ansprüche 8 bis 11, **dadurch gekennzeichnet, dass** im Bereich des elektrischen Kontakts (24) eine Paste zum Schutz des elektrischen Kontakts (24) vor Feuchtigkeit angeordnet ist und/oder dass der jeweilige elektrische Kontakt (24) eine Beschichtung aus Edelmetall aufweist.

## Claims

1. Method for producing a measuring device (1-4, 57) which serves to detect a fluid variable, wherein the fluid variable relates to a fluid which is received or guided in a fluid volume (6) delimited by a measuring duct (5), and/or relates to a fluid flow of this fluid,
wherein a transducer housing (7), in the interior (8) of which is disposed a vibration transducer (8, 9), is disposed in an interior (10) of the measuring duct (5) that comprises the fluid volume (6);
wherein the transducer housing (7) is connected to the measuring duct (5) in that a connection means (11) is inserted into a through hole (12) of the measuring duct (5), on the one hand, and is inserted into an opening (13) of the transducer housing (7), on the other hand, in such a manner that at least one feedthrough (14) of the connection means (11) that connects an exterior (15) lying outside the measuring duct (5) to the interior (17) of the transducer housing (7) is sealed in a fluid-tight manner in relation to the fluid volume (6),
wherein, conjointly with or after inserting the connection means (11) into the opening (13) of the transducer housing (7), or as a sub-component of the connection means (11), at least one electrical conductor (23), which is routed through the feedthrough (14) and by way of which a respective electrical contact (24) of the vibration transducer (8, 9) is contacted so as to connect the latter to a control device (25) of the measuring device (1-4, 57) that is disposed in the exterior, is inserted into the interior (17) of the transducer housing (7),
**characterized in that** the respective conductor (23) is connected to the respective electrical contact (24) in such a manner that the conductor (23) and the electrical contact (24) are pressed onto one another by a pressing element (26, 27) which is disposed in the exterior (15) or extends through the or a further feedthrough (14) of the connection means (11) from the interior (17) of the transducer housing (7) into the exterior (15).

2. Method according to Claim 1, **characterized in that** a circuit board which supports at least one component (28) electrically connected to the conductor (23), and/or forms at least one conductor path (29) electrically connected to the conductor (23), is used as the pressing element (26).

3. Method according to Claim 1, wherein the pressing element (27) extends through the or the further feedthrough (14) of the connection means (11) into the exterior (15), **characterized in that** the pressing element (27) is inserted from the exterior (15) in an insertion direction through this feedthrough (14), wherein a compression face (54) of the pressing element (27) is curved, or runs at an angle to the insertion direction, in such a manner that said compression face during insertion displaces or bends the electrical contact (24) or the conductor (23) in the direction perpendicular to the insertion direction so as to press the electrical contact (24) onto the conductor (23), or the conductor (23) onto the electrical contact (24).

4. Method according to one of the preceding claims, **characterized in that** the connection means (11) is connected to the measuring duct (5) and the transducer housing (7) in such a manner that an intermediate space (18) between the external wall of the connection means (11) and the through hole (12) of the measuring duct (5) is closed in a fluid-tight manner by a measuring duct sealant (19), on the one hand, and **in that** an intermediate space (20) between the housing wall (22) delimiting the opening (13) of the transducer housing (7) and the external wall of the connection means (11) is closed in a fluid-tight manner by a housing sealant (21), on the other hand.

5. Method according to one of the preceding claims, **characterized in that** the transducer housing (7) is incorporated into the measuring duct (5) through a fluid inlet (30) or a fluid outlet (31) of the latter.

6. Method according to one of the preceding claims, **characterized in that** the vibration transducer (8, 9) and/or a damper element (36) which serves to at least partially decouple the vibration transducer (8, 9) from a lateral wall of the transducer housing (7), are/is inserted into the transducer housing (7) by way of the opening (13) of the transducer housing (7) .

7. Method according to one of Claims 1 to 5, **characterized in that** a wave guide (50) is disposed in the measuring duct (5), wherein the vibration transducer (8, 9) is attached to an end portion (51) of the wave guide (50) in such a manner that a guided wave in the wave guide (50) is able to be excited by an operation of the vibration transducer (8, 9), wherein the end portion (51) of the wave guide (50) is introduced in the transducer housing (7) through a further opening (52) of the latter, so as to dispose the vibration transducer (8) in the transducer housing (7) in particular before the connection means (11) is inserted into the opening (13) of the transducer housing (11) and/or before the electrical conductor (23) routed through the feedthrough (14) is introduced into the interior (17) of the transducer housing (7).

8. Measuring device which serves to detect a fluid variable, wherein the fluid variable relates to a fluid which is received or guided in a fluid volume (6) delimited by a measuring duct (5), and/or relates to a fluid flow of this fluid; wherein the control device (25) is specified to actuate a vibration transducer (8) of the measuring device (1-4, 57) so as to excite a pressure surge in the fluid, to detect measured data depending on the pressure surge by way of the vibration transducer (8) or a further vibration transducer (9) of the measuring device (1-4, 57), and to determine the fluid variable as a function of the measured data; wherein the vibration transducer (8) and/or the further vibration transducer (9) are/is in each case disposed in the interior (17) of a respective transducer housing (11) that is disposed in an interior (10) of the measuring duct (5) comprising the fluid volume (6);
wherein the respective transducer housing (7) is connected to the measuring duct (5) in that a respective connection means (11) is inserted into a respective through hole (12) of the measuring duct (5), on the one hand, and is inserted into an opening (13) of the respective transducer housing (7), on the other hand, in such a manner that at least one feedthrough (14) of the respective connection means (11) that connects an exterior (15) lying outside the measuring duct (5) to the interior (17) of the respective transducer housing (7) is sealed in a fluid-tight manner in relation to the fluid volume (6) ;
wherein at least one electrical conductor (23), which is routed through the feedthrough (14) and by way of which a respective assigned electrical contact (24) of the vibration transducer (8) or of the further vibration transducer (9) is contacted so as to connect the latter to the control device (25) of the measuring device (1-4, 57) that is disposed in the exterior (15), is inserted into the interior (17) of the respective transducer housing (7),
**characterized in that**
the measuring device (1-4, 57) comprises a pressing element (26, 27) by which the respective conductor (23) and the assigned electrical contact (24) are pressed onto one another, wherein the pressing element (26, 27) is disposed in the exterior (15) or extends through the or a further feedthrough (14) of the connection means (11) from the interior (17) of the transducer housing (6) into the exterior (15) .

9. Measuring device according to Claim 8, **characterized in that** the vibration transducer (8) and/or the further vibration transducer (9) comprise/comprises a vibrating body (37) of an active material, wherein at least one of the electrical contacts (24) of the and/or of the further vibration transducer (8, 9) is formed by an electrode (38, 39) of the respective vibrating body (37), or a contact plate (41, 42) that contacts this electrode (38, 39), wherein a contact portion (40) of this electrode (38, 39), or of this contact plate, extends beyond this vibrating body (37), wherein the assigned conductor (23) contacts the electrode (38, 39) or the contact plate (41, 42) in this contact portion (40) so as to be spaced apart from the vibrating body (37).

10. Measuring device according to Claim 8 or 9, **characterized in that** a measuring insert (32) which constricts the flow cross section of the measuring duct (5) and/or which forms or supports at least one element (33, 34) for reflecting the pressure surge and/or for influencing the fluid flow is disposed in the measuring duct (5), wherein the respective transducer housing (7) is attached to the measuring insert (32).

11. Measuring device according to one of Claims 8 to 10, **characterized in that** a wave guide (50) is disposed in the measuring duct (5), wherein the vibration transducer (8) is attached to an end portion (51) of the wave guide (50) in such a manner that a guided wave in the wave guide (50) is able to be excited by an operation of the vibration transducer (8), wherein the end portion (51) of the wave guide (50) is introduced in the transducer housing (7) through a further opening (52) of the latter, so as to dispose the vibration transducer (8) in this transducer housing (7).

12. Measuring device according to Claim 11, **characterized in that** the wave guide (50) penetrates the further opening (52) at an angle between 45° and 135° in relation to that direction in which the connection means (11) is inserted into the opening (13) of this transducer housing (7), and/or in relation to that direction in which the conductor (23) contacting the vibration transducer (7) extends through the feedthrough (14).

13. Measuring device according to one of Claims 8 to 11, **characterized in that** a paste for protecting the electrical contact (24) against moisture is disposed in the region of the electrical contact (24), and/or in that the respective electrical contact (24) has a coating of precious metal.

## Revendications

1. Procédé de fabrication d'un dispositif de mesure (1 - 4, 57) qui sert à détecter une grandeur fluidique, la grandeur fluidique concernant un fluide qui est reçu ou guidé dans un volume de fluide (6) délimité par un conduit de mesure (5) et/ou un écoulement de ce fluide, un boîtier de transducteur (7), dans l'espace intérieur (8) duquel est disposé un transducteur de vibrations (8, 9), étant disposé dans un espace intérieur (10) du conduit de mesure (5) qui comprend le volume de fluide (6),
le boîtier de transducteur (7) étant relié au conduit de mesure (5) en ce qu'un moyen de liaison (11) est inséré dans un passage (12) du conduit de mesure (5) d'une part et dans une ouverture (13) du boîtier de transducteur (7) d'autre part,
au moins un passage (14) du moyen de liaison (11), qui relie un espace extérieur (15), situé à l'extérieur du conduit de mesure (5), à l'espace intérieur (17) du boîtier de transducteur (7) étant scellé de manière étanche au fluide par rapport au volume de fluide (6),
conjointement à ou après l'insertion du moyen de liaison (11) dans l'ouverture (13) du boîtier de transducteur (7) ou en tant que composant partiel du moyen de liaison (11), au moins un conducteur électrique (23) guidé à travers le passage (14) étant introduit dans l'espace intérieur (17) du boîtier de transducteur (7) à travers lequel un contact électrique respectif (24) du transducteur de vibrations (8, 9) est mis en contact afin de relier celui-ci à un dispositif de commande (25), disposé dans l'espace extérieur, du dispositif de mesure (1 - 4, 57), **caractérisé en ce que** le conducteur respectif (23) est relié au contact électrique respectif (24) de manière à ce que le conducteur (23) et le contact électrique (24) soient pressés l'un contre l'autre par un élément de pression (26, 27) qui est disposé dans l'espace extérieur (15) ou qui s'étend depuis l'espace intérieur (17) du boîtier de transducteur (7) jusque dans l'espace extérieur (15) à travers le passage (14), ou un autre, du moyen de liaison (11).

2. Procédé selon la revendication 1, **caractérisé en ce qu'**une carte de circuit imprimé, qui porte au moins un composant (28) relié électriquement au conducteur (23) et/ou au moins une piste conductrice (29) reliée électriquement au conducteur (23), est utilisée comme élément de pression (26).

3. Procédé selon la revendication 1, l'élément de pression (27) s'étendant à travers le passage (14), ou l'autre passage, du moyen de liaison (11) jusque dans l'espace extérieur (15), **caractérisé en ce que** l'élément de pression (27) est poussé depuis l'espace extérieur (15) dans une direction d'insertion à travers ce passage (14), une surface de pression (54) de l'élément de pression (27) étant incurvée ou inclinée par rapport à la direction d'insertion de telle sorte que, lorsqu'elle est insérée, elle pousse ou plie le contact électrique (24) ou le conducteur (23) dans une direction perpendiculaire à la direction d'insertion afin de presser le contact électrique (24) sur le conducteur (23) ou de presser le conducteur (23) sur le contact électrique (24).

4. Procédé selon l'une des revendications précédentes, **caractérisé en ce que** le moyen de liaison (11) est relié au conduit de mesure (5) et au boîtier du transducteur (7) de telle sorte que d'une part un espace intermédiaire (18) entre la paroi extérieure du moyen de liaison (11) et le passage (12) du conduit de mesure (5) soit fermé de manière étanche aux fluides par un moyen d'étanchéité de conduit de mesure (19) et que d'autre part un espace intermédiaire (20) entre la paroi du boîtier (22), délimitant l'ouverture (13) du boîtier de transducteur (7), et la paroi extérieure du moyen de liaison (11) soit fermé de manière étanche aux fluides par un moyen d'étanchéité de boîtier (21).

5. Procédé selon l'une des revendications précédentes, **caractérisé en ce que** le boîtier de transducteur (7) est introduit dans le conduit de mesure (5) par une entrée de fluide (30) ou une sortie de fluide (31).

6. Procédé selon l'une des revendications précédentes, **caractérisé en ce que** le transducteur de vibrations (8, 9) et/ou un élément d'amortissement (36) qui sert à découpler au moins partiellement le transducteur de vibrations (8, 9) d'une paroi latérale du boîtier de transducteur (7), peut être inséré dans le boîtier de transducteur (7) par l'ouverture (13) du boîtier de transducteur (7).

7. Procédé selon l'une des revendications 1 à 5, **caractérisé en ce qu'**un guide d'onde (50) est disposé dans le conduit de mesure (5), le transducteur de vibrations (8, 9) étant fixé à une portion d'extrémité (51) du guide d'ondes (50) de manière à ce qu'une onde guidée dans le guide d'ondes (50) puisse être excitée par le fonctionnement du transducteur de vibrations (8, 9), la portion d'extrémité (51) du guide d'ondes (50) étant insérée dans le boîtier de transducteur (7) par une autre ouverture (52) de celui-ci afin de disposer le transducteur de vibrations (8) dans le boîtier de transducteur (7), en particulier avant que le moyen de liaison (11) ne soit inséré dans l'ouverture (13) du boîtier de transducteur (11) et/ou avant que le conducteur électrique (23) guidé à travers le passage (14) ne soit inséré dans l'espace intérieur (17) du boîtier de transducteur (7).

8. Dispositif de mesure, utilisé pour détecter une grandeur fluidique, la grandeur fluidique concernant un fluide reçu ou guidé dans un volume de fluide (6) délimité par un conduit de mesure (5) et/ou un écoulement fluide de ce fluide,
le dispositif de commande (25) étant conçu pour commander un transducteur de vibrations (8) du dispositif de mesure (1 à 4, 57) afin d'exciter une onde de pression dans le fluide, d'acquérir des données de mesure dépendant de l'onde de pression par le biais du transducteur de vibrations (8) ou d'un autre transducteur de vibrations (9) du dispositif de mesure (1 - 4, 57) et déterminer la grandeur fluidique en fonction des données de mesure,
le transducteur de vibrations (8) et/ou l'autre transducteur de vibrations (9) étant disposés chacun dans l'espace intérieur (17) d'un boîtier de transducteur respectif (11) qui est disposé dans l'espace intérieur (10) du conduit de mesure (5) qui contient le volume de fluide (6),
le boîtier de transducteur respectif (7) étant relié au conduit de mesure (5) en ce qu'un moyen de liaison respectif (11) est inséré dans un passage respectif (12) du conduit de mesure (5) d'une part et dans une ouverture (13) du boîtier de transducteur respectif (7) d'autre part de telle sorte qu'au moins un passage (14) du moyen de liaison respectif (11), qui relie un espace extérieur (15) situé à l'extérieur du conduit de mesure (5), à l'espace intérieur (17) du boîtier de transducteur respectif (7) soit fermé de manière étanche aux fluides par rapport au volume de fluide (6),
au moins un conducteur électrique (23) guidé à travers le passage (14) étant guidé jusque dans l'espace intérieur (17) du boîtier de transducteur respectif (7) à travers lequel un contact électrique associé (24) du transducteur de vibrations (8) ou de l'autre transducteur de vibrations (9) est mis en contact afin de relier celui-ci au dispositif de commande (25), disposé dans l'espace extérieur (15), du dispositif de mesure (1 à 4, 57),
**caractérisé en ce que**
le dispositif de mesure (1 - 4, 57) comprend un élément de pression (26, 27) par le biais duquel le conducteur respectif (23) et le contact électrique associé (24) sont pressés l'un contre l'autre, l'élément de pression (26, 27) étant disposé dans l'espace extérieur (15) ou s'étendant depuis l'espace intérieur (17) du boîtier de transducteur (6) jusque dans l'espace extérieur (15) à travers le passage (14), ou un autre passage, du moyen de liaison (11).

9. Dispositif de mesure selon la revendication 8, **caractérisé en ce que** le transducteur de vibrations (8) et/ou l'autre transducteur de vibrations (9) comprennent un corps vibrant (37) en matériau actif, au moins un des contacts électriques (24) du transducteur de vibrations et/ou de l'autre transducteur de vibrations (8, 9) étant formé par une électrode (38, 39) du corps vibrant respectif (37) ou une plaque de contact (41, 42) en contact avec cette électrode (38, 39), une portion de contact (40) de cette électrode (38, 39) ou de cette plaque de contact s'étendant au-delà de ce corps vibrant (37), le conducteur associé (23) venant en contact avec l'électrode (38, 39) ou la plaque de contact (41, 42) dans cette portion de contact (40) à distance du corps vibrant (37).

10. Dispositif de mesure selon la revendication 8 ou 9, **caractérisé en ce qu'**un insert de mesure (32) est disposé dans le conduit de mesure (5), lequel insert de mesure rétrécit la section d'écoulement transversale du conduit de mesure (5) et/ou forme ou porte au moins un élément (33, 34) destiné à réfléchir l'onde de pression et/ou à influer sur l'écoulement de fluide, le boîtier de transducteur respectif (7) étant fixé à l'insert de mesure (32).

11. Dispositif de mesure selon l'une des revendications 8 à 10, **caractérisé en ce qu'**un guide d'onde (50) est disposé dans le conduit de mesure (5), le transducteur de vibrations (8) étant monté sur une portion d'extrémité (51) du guide d'onde (50) de manière à ce qu'une onde guidée dans le guide d'onde (50) soit excitée par le fonctionnement du transducteur de vibrations (8), la portion d'extrémité (51) du guide d'onde (50) étant introduit dans le boîtier de transducteur (7) par une autre ouverture (52) de celui-ci afin de disposer le transducteur de vibrations (8) dans ce boîtier de transducteur (7).

12. Dispositif de mesure selon la revendication 11, **caractérisé en ce que** le guide d'ondes (50) traverse l'autre ouverture (52) suivant un angle compris entre 45° et 135° par rapport à la direction dans laquelle le moyen de liaison (11) est inséré dans l'ouverture (13) de ce boîtier de transducteur (7) et/ou dans la direction dans laquelle le conducteur (23) en contact avec le transducteur de vibrations (7) s'étend à travers le passage (14).

13. Dispositif de mesure selon l'une des revendications 8 à 11, **caractérisé en ce qu'**une pâte destinée à protéger le contact électrique (24) de l'humidité est disposée dans la zone du contact électrique (24) et/ou **en ce que** le contact électrique respectif (24) comporte un revêtement en métal noble.
